(19)

**Europäisches Patentamt**
**European Patent Office**
**Office européen des brevets**

(11) **EP 4 553 690 A1**

(12) **EUROPEAN PATENT APPLICATION**

(43) Date of publication:
14.05.2025 Bulletin 2025/20

(21) Application number: 24211660.6

(22) Date of filing: 08.11.2024

(51) International Patent Classification (IPC):
*G06F 30/12* (2020.01)   *G06F 111/18* (2020.01)
*G06F 111/04* (2020.01)   *G06F 111/06* (2020.01)
*G06F 113/10* (2020.01)

(52) Cooperative Patent Classification (CPC):
**G06F 30/12;** G06F 2111/04; G06F 2111/06;
G06F 2111/18; G06F 2113/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 13.11.2023 US 202363598299 P
16.04.2024 US 202418637302

(71) Applicant: **Autodesk, Inc.
San Francisco, CA 94105 (US)**

(72) Inventors:
• **BURLA, Ravi Kumar
San Francisco, 94105 (US)**
• **WEISS, Benjamin McKittrick
San Francisco, 94105 (US)**
• **RODRIGUEZ, Jesus
San Francisco, 94105 (US)**
• **RAKUS, Marcin Jan
San Francisco, 94105 (US)**

(74) Representative: **Fish & Richardson P.C.
Highlight Business Towers
Mies-van-der-Rohe-Straße 8
80807 München (DE)**

(54) **COMPUTER AIDED AUTOMATED MODELING OF EDITABLE SKETCHES**

(57) Methods, systems, and apparatus, including medium-encoded computer program products, for converting a representation of a 2D curve into a set of simple sketch contours. A 2D curve and predefined geometries are obtained and are converted into a primitive sketch geometry by approximating free regions as segmented from the 2D curve to a set of 2D primitives so as to minimize a number of 2D primitives used in the primitive sketch geometry. The conversion of the 2D curve includes: processing candidate segments determined based on segmenting the free regions according to identified points on the 2D curve that meet a threshold for curve contact with a geometry of the predefined geometries to determine a set of segments for the free regions, and fitting the set of segments to the set of 2D primitives. The primitive sketch geometry is provided for rendering, editing, and/or simulating at a computer-aided design program.

FIG. 1

EP 4 553 690 A1

**Description**

CROSS-REFERENCE TO RELATED APPLICATION

This application claims priority to U.S. Provisional Application No. 63/598,299, filed on November 13, 2023. The disclosure of the prior application is considered part of and is incorporated by reference in the disclosure of this application.

BACKGROUND

This specification relates to computer aided design of physical structures, which can be manufactured using additive manufacturing, subtractive manufacturing and/or other manufacturing systems and techniques, or other structures, which can be provided as a digital asset, such as for use in animation.

Computer Aided Design (CAD) software has been developed and used to generate three-dimensional (3D) representations of objects, and Computer Aided Manufacturing (CAM) software has been developed and used to evaluate, plan and control the manufacture of the physical structures of those objects, e.g., using Computer Numerical Control (CNC) manufacturing techniques. Typically, CAD software stores the 3D representations of the geometry of the objects being modeled using a boundary representation (B-Rep) format. A B-Rep model is a set of connected surface elements specifying boundaries between a solid portion and a non-solid portion of the modeled 3D object. In a B-Rep model (often referred to as a B-Rep), geometry is stored in the computer using smooth and precise mathematical surfaces, in contrast to the discrete and approximate surfaces of a mesh model, which can be difficult to work with in a CAD program.

In addition, CAD software has been designed to perform automatic generation of 3D geometry of one or more parts in a design (known as "topology optimization", "generative design", or "generative modelling", among others). This automated generation of 3D geometry often works within a "design domain" specified by a user or the CAD software and generates geometry typically by optimizing design objectives and respecting design constraints, which can be defined by the user, CAD software, or a third party. The design objectives can include but are not limited to minimizing waste material, minimizing the weight of the part, and minimizing the compliance, stress, maximum mass, maximum deflection under load, or other intrinsic property of the part, and are used to drive the shape synthesis process towards better designs. Though not required, it is typical for a design objective to be rooted in a simulation of the design (linear static, fluid dynamic, electromagnetic, etc.). Design constraints can include a variety of physical characteristics or behaviors that must be met in any generated design (requirements, either for individual parts or for the entire assembly, are also admissible); examples include maximum mass, maximum deflection under load, maximum stress, etc.

Geometric constraints may also be provided, for example to ensure the generated shape has no tiny features or is more easily realized using a particular manufacturing process. Further, the geometric inputs to such a 3D geometry generation tool can include one or more user- or CAD system- provided "preserve bodies" (indicating volumetric regions of the design space that should be filled in with material in a final design) or "preserve faces" (indicating interfaces between the design space and an adjacent component that should be contacted by the generated 3D geometry) which should always be present in the design. Other regions in which geometry should or should not be generated can also be provided in a similar manner (e.g., "obstacle bodies" used to indicate where geometry should not be created). In some cases, the shape synthesis process takes place using a different representation of geometry than that employed by the CAD system. For example, a CAD system might use a boundary representation ("B-Rep") while the geometry generation engine might employ a level-set function embedded in a voxel or tetrahedral mesh.

SUMMARY

This specification describes technologies relating to computer aided design of two-dimensional (2D) geometry, including converting a representation of a 2D curve to provide a set of simple sketch contours that maintains an overall shape of the input curve to construct a 3D model of an object. The representation of the 2D curve includes a set of connected points to describe the 2D curve. In some instances, different techniques can be used to synthesize a 2D shape or a region of a 3D geometry and represent the geometry by applying a level set or dense polyline approximation techniques. Based on such techniques, a 2D shape may be provided in a form that is not suitable for forming an editable sketch geometry that a user can work with in a CAD system. In some instances, the representation of the 2D curve can be based on a hand-drawn input defining a 2D shape, which may be provided by a user and used as input for sketch automation to be converted into a sketch geometry.

In some instances, points that describe the 2D curve can be obtained and used to be converted to a set of parametric primitives that approximate the shape. In some instances, the points can be sampled on a zero contour of a level-set representation of a 2D profile of a plate generated based on an automated modeling plates solver. In some instances, the points can be derived from another type of geometry representation generated by a modeling plates solver not limited to level-set representations. In some instances, the points defining the 2D curve can be derived from a hand-drawn curve that is defined to connect preserve bodies. The conversion of the 2D curve into a primitive sketch geometry can be employed in various contexts including generative design and automated modeling, as well as sketch workspace automations. In some implementations, a topology optimization can be performed and a 2D profile representing the geometry (e.g., as a direct output or through post-processing after the topology optimization) can be created for some region or the whole of a design by sketching and extrusion. In such cases, based on the described conversion techniques in the present disclosure, a geometry representation, such as a level-set representation, can be converted into a sketch geometry using a relatively small number of primitives (e.g., simple primitives such as lines and arcs) while maintaining the shape and connectivity of the curve as implied by the optimized design.

In some implementations, a 2D shape representation (e.g., a 2D level-set representation, an isoline from a 2D level-set, or a dense polyline geometry, among other representation types) is converted into a primitive sketch geometry to construct a boundary representation of a 3D model of an object. The construction of the 3D model can include extruding the 2D geometry of the sketch into a third dimension to form the 3D geometry of the object for use in manufacturing a physical structure of the object using a computer-controlled manufacturing system.

In the automated modeling context, it is desirable to minimize the complexity of a resulting sketch, even when that reduces the accuracy of the output matching the initial shape. The initial shape can be an optimized design, for example based on different topology optimization methods. Generally, there are two primary categories of topology optimization, density-based approaches, and boundary-based approaches. Density-based approaches discretize the volume of the part, and assign a density to each discrete cell, such as in a Solid Isotropic Material with Penalization (SIMP) method. Then the densities are driven toward solid and empty while minimizing the objective(s) subject to the constraints. Boundary-based approaches instead track the shape of the external interface of the solid part and move the boundary such that the constraints are satisfied, and the objective(s) are minimized, such as in a level-set method. In some implementations, converting the level set shape or tracing of the intermediate density field in SIMP can be performed to generate a precise sketch geometry using a relatively small number of primitives in accordance with implementations of the present disclosure. Additionally, in the context of sketch automation, a hand-drawn curve can be used instead of a level-set representation or another geometry representation to provide a simple sketch that is easy to edit and can be used to construct a boundary representation in 3D. In some instances, the methods of the present disclosure can be tailored to cases where a set of input preserve profiles (i.e., slices or projections of 3D preserve geometries in automated modeling) and an optional set of obstacles are part of the problem setup, defining the input to be used for generating a simple primitive sketch. In some instances, a problem setup can be inferred from a geometric context of a received representation of 2D curves that is provided to be converted to a simple primitive sketch. In some instances, input representing 2D curves can be provided as a sketch geometry that can be obtained, for example, through a sketch application that received user interaction to define the sketch. In some instances, it can be inferred from the geometry of the input sketch that the portions of the sketch that are not contacted by an input marker line correspond to portions defining an obstacle. By processing the geometry of the input sketch, a problem setup can be defined that includes preserves and/or obstacles, where those can be inferred from the geometric context.

The methods described can be applied beyond generative design and automated modeling contexts, as the methods can help in automating sketch generation. Independent of an optimization framework (or possibly in coordination with one), a user can connect some existing sketch elements (e.g., preserves provided as input for a 3D geometry generation, or if the initial 2D curves are provided as a hand-drawn sketch, the preserves can be automatically detected by analyzing pre-existing sketch elements near the start or end of the hand-drawn input) with a hand-drawn curve (or otherwise coarsely defined input by a computer or tool). A coarse approximation of the shape as provided by a hand-drawn curve can be used in a similar way to a level-set isoline to create a primitive sketch geometry which approximately follows the user's curve while using a relatively small number of sketch entities.

Particular embodiments of the subject matter described in this specification can be implemented to realize one or more of the following advantages.

The methods described can be applied to provide robust and stable post-processing of automated modelling outcomes. The automated modelling can support the productivity of the user in a design process and in creating engineering-style shapes instead of organic forms. The conversion of a shape representation into a sketch geometry that is easy to edit can improve the design process and support users. The present methods can support approximation of shapes with a small number of 2D primitives while respecting exact contact with a set of preserve bodies and avoiding a set of obstacle bodies.

In some cases, level-set geometry representation may not be a native form of representation used by an employed CAD system, and thus, editing, simulating, and manufacturing a shape based on such a representation may be difficult. By utilizing the techniques of the present disclosure, the representation can be converted into sketch entities that can be easy to work with and modify without switching to other software applications or without undue time delays or heavy computational processing to perform a modification. The conversion of a representation of a 2D curve and predefined geometries into a primitive sketch geometry can provide a useful starting point for further edits by users, since the generated sketch would use a small number of sketch entities. The generation of a low number of sketch entities ensures responsiveness to further edits in timely manner while still allowing the sketch to stay as close as possible to one a human might design. Further, by generating a sketch with a lower number of sketch entities (e.g., determined with a reference to a threshold number of sketch entities, where the threshold can be dynamically or statically determined), the sketch solver as program code that processes the sketch is provided with improved stability during editing so that the program is with reduced likelihood of failure and/or unresponsiveness based on requests for performing edits to the generated sketch. When the sketch is edited, the edits can be handled so that the edited sketch is maintained as stable and complete.

The present curve approximation approaches support generation of simple sketches in cases where boundary curves are present and may or may not be contacted (e.g., in some cases some boundary curves might have to be exactly contacted and in others, an automatic selection can be performed for selecting boundary curves that should not be contacted), while maintaining relatively low complexity by using fewer and less complex primitives (e.g., lines, arcs, circles). The described method can provide stable low-primitive-count sketches that can be generated even when constraints on the automated modeling project are present.

The details of one or more embodiments of the subject matter described in this specification are set forth in the accompanying drawings and in the description below. Other features, aspects, and advantages of the invention will become apparent from the description, the drawings, and the claims.

BRIEF DESCRIPTION OF THE DRAWINGS

FIG. 1 shows an example of a system usable to facilitate computer-aided design of structures that are converted into a set of simple sketch contours.

FIG. 2A is an example of a conversion process where an input 2D curve and predefined geometries are converted into a number of 2D primitives based on segmentation and fitting techniques.

FIG. 2B represents different types of intersections.

FIG. 3 is an example of a process for converting a 2D curve and predefined geometries into a primitive sketch geometry with a minimized number of 2D primitives in accordance with implementations of the present disclosure.

FIGS. 4A and 4B show an example of a process for segmentation of a representation of a 2D curve and predefined geometries as input for conversion to a sketch geometry in accordance with implementations of the present disclosure.

FIG. 5 is an example of an isoline with a labelled start and end index.

FIG. 6 shows two examples of setups to draw an incident vector and to modify a segment to ensure connection of a candidate segment to an object.

FIG. 7 shows determined segments before and after connecting the endpoints to objects as referred at 465 of FIG. 4B.

FIG. 8 is an example of unnecessary segments for an isoline that forms a path nearly equivalent to two boundary curves.

FIG. 9 is a flow diagram of an example of a method for fitting a set of segments based on segment specifications in accordance with implementations of the present disclosure.

FIG. 10 shows examples for segment fitting with primitives including lines, arcs, combination of lines and arcs, and splines in accordance with the present disclosure.

FIGS. 11A and 11B are flow diagrams presenting an example of a trimming process in accordance with implementations of the present disclosure.

FIG. 12A shows examples of simplified curves according to a process for simplification of a polyline curve into a set of simple primitives.

FIG. 12B shows an example of polyline simplification.

FIG. 12C shows an example of a polyline.

FIG. 13 is a schematic diagram of a data processing system including a data processing apparatus, which can be programmed as a client or as a server.

DETAILED DESCRIPTION

In general, this specification is related to methods for approximation of shapes with a small number of 2D primitives while respecting exact contact with a set of preserve bodies and/or avoiding a set of obstacle bodies.

A method for converting a 2D curve and predefined geometries is described that provides a primitive sketch geometry that includes simple low-count primitives generated based on segmentation according to proximity to preserves. The generated primitive sketch geometry can be used for rendering at a display device. The generated sketch geometry can be provided for editing and simulation performed, for example, at a CAD program, based on user input and can be used to construct a 3D model of a physical object that can be manufactured using computer-controlled manufacturing systems.

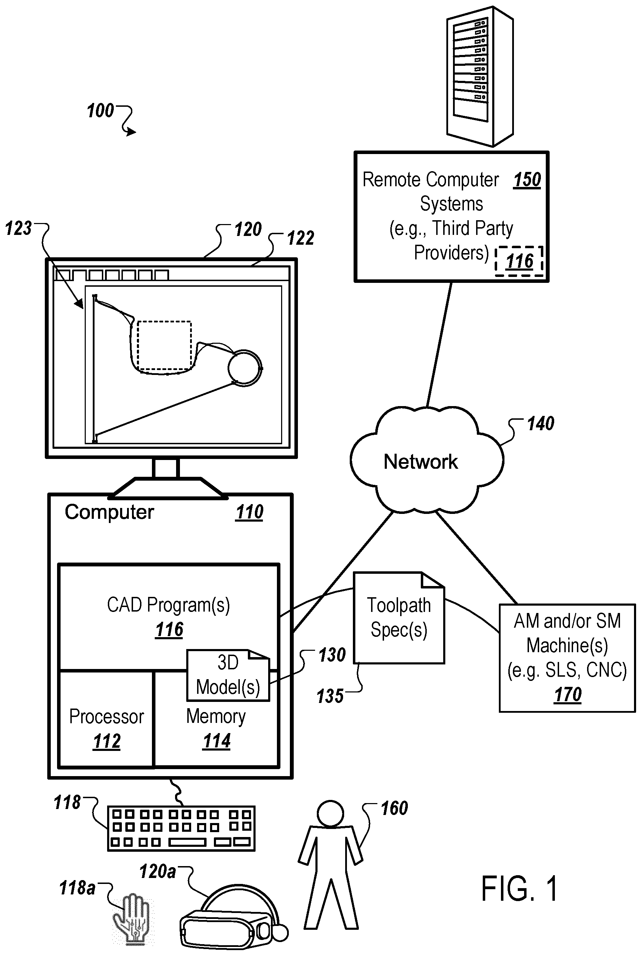

FIG. 1 shows an example of a system 100 usable to facilitate computer-aided design of structures that are converted into a set of simple sketch contours. A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which implement two-dimensional (2D) and/or three-dimensional (3D) modeling functions, which can be implemented as part of one or more generative design processes for topology optimization, e.g., using at least one level-set method, in other applications of topology optimization, e.g., automated modeling, and/or for automated sketch generation processes.

As used herein, CAD refers to any suitable program used to design physical structures that meet design requirements, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, a CAD program 116 can be two or more programs that operate cooperatively on two or more separate computer processors in that one or more programs 116 operating locally at computer 110 can offload processing operations (e.g., shape generation and/or physical simulation operations) "to the cloud" by having one or more programs 116 on one or more computers 150 perform the offloaded processing operations.

The CAD program(s) 116 present a user interface (UI) 122 on a display device 120 of the computer 110, which can be operated using one or more input devices 118 of the computer 110 (e.g., keyboard and mouse). Note that while shown as separate devices in FIG. 1, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, and 120 can include VR/AR input controllers, gloves, or other hand manipulating tools 118a, and/or a VR/AR headset 120a. In some instances, the input/output devices can include hand-tracking devices that are based on sensors that track movement and recreate interaction as if performed with a physical input device. In some implementations, VR and/or AR devices can be standalone devices that may not need to be connected to the computer 110. The VR and/or AR devices can be standalone devices that have processing capabilities and/or an integrated computer such as the computer 110, for example, with input/output hardware components such as controllers, sensors, detectors, etc.

In any case, a user 160 interacts with the CAD program(s) 116 to create and/or modify a representation of a 2D curve. In some implementations, the 2D curve can be provided based on user input, such as drawing by hand, from user 160. In some implementations, the 2D curve can be an output geometry of a shape synthesis process. In some instances, the 2D curve can be provided as an output representation from a topology optimization that includes a 2D profile that represents a geometry created for a region of a design. The 2D curve can be represented as a level-set shape representation, which, based on implemented conversion logic in accordance with the present implementations, can be converted into a sketch geometry and used at the CAD program(s) 116 for further viewing, editing, and/or simulation to generate a 3D model 130 to be used for manufacturing a physical structure.

In some instances, based on user input and some existing sketch elements as predefined geometries (e.g., preserves and/or obstacles), a primitive sketch geometry that follows the curve while using a relatively small number of sketch entities can be created. The input that can be used for the sketch generation can be obtained through different techniques to synthesize a 2D shape or a region of an optimized 3D geometry, or can be a hand-drawn curve as a coarse approximation of the 2D shape that can be used as a representation (in a similar way to the level-set representation) to initiate a conversion to a primitive sketch geometry generation in accordance with implementations of the present disclosure.

The input predefined geometries that can be provided to the conversion process can include preserve regions that can be unconnected modeled solids or surfaces (e.g., user identified faces of modeled solids). A sketch generation process is used to produce a simple sketch geometry, where the converted sketch geometry connects all the input preserve regions and avoids obstacles, such as in the example of FIG. 1.

The CAD program(s) 116 can implement at least one generative design process, which enables the CAD program(s) 116 to generate one or more portions of 3D model(s) (or the entirety of a 3D model) automatically based on design objective(s) and constraint(s), i.e., design criteria, where the geometric design can be iteratively optimized based on simulation feedback (e.g., based on a numerical, physics simulation). In some instances, multiple 3D models can be co-created by one or more generative design processes and can be assembled to form a new 3D model. Note that, as used herein, "optimization" (or "optimum") does not mean that the best of all possible designs is achieved in all cases, but rather, that a best (or near to best) design is selected from a finite set of possible designs that can be generated within an allotted time, given the available processing resources. In any case, note that the shape generation process can be done using a different representation of geometry than that employed by the CAD program(s) 116 for 3D modelling. For example, the CAD program(s) 116 can use a B-Rep model for the input geometry, while the geometry generation engine (e.g., in CAD program(s) 116) can employ a level-set function embedded in a mesh.

In some instances, the user 160 can obtain a sketch geometry 123 and, optionally, can modify it to generate a final result. In some instances, the sketch geometry 123 can be generated based on a 2D sketch that can be provided as input. The 2D sketch can have a representation such as a level-set shape representation. The user 160 can use the 2D sketch as input, for example to a modelling tool for further modelling or automated processing, where the sketch geometry 123 can be created, for example, by an automated modeling tool that uses the 2D sketch and performed commands to create a 3D model that can be used for manufacturing a physical structure. A computer model can be generated as a 3D model document 130 and/or used to generate another representation of the model (e.g., toolpath specifications for a manufacturing process). This can be done upon request by the user 160, or in light of the user's request for another action, such as sending the computer model to a manufacturing machine, e.g., additive manufacturing (AM) machine(s) and/or subtractive manufacturing (SM) machine(s) 170, or other manufacturing machinery, which can be directly connected to the computer 110, or connected via a network 140, as shown. This can involve a post-process carried out on the local computer 110 or externally, for example, based on invoking a cloud service running in the cloud, to further process the generated 3D model (e.g., based on considerations associated with the additive manufacturing process) and to export the 3D model to an electronic document from which to manufacture. Note that an electronic document (which for brevity will simply be referred to as a document) can be a file but does not necessarily correspond to a file. A document may be stored in a portion of a file that holds other documents, in a single file dedicated to the document in question, or in multiple coordinated files. In addition, the user 160 can save or transmit the 3D model for later use. For example, the CAD program(s) 116 can store the document 130 that includes the algorithmically designed model.

The CAD program(s) 116 can provide a document 135 (having toolpath specifications of an appropriate format) to an AM and/or SM machine 170 to produce a physical structure corresponding to at least a portion of the algorithmically designed model. An AM machine 170 can employ one or more additive manufacturing techniques, such as granular techniques (e.g., Powder Bed Fusion (PBF), Selective Laser Sintering (SLS) and Direct Metal Laser Sintering (DMLS)) or extrusion techniques (e.g., Fused Filament Fabrication (FFF), metals deposition). In some cases, the AM machine 170 builds the physical structure directly. In some cases, the AM machine 170 builds a mold for use in casting or forging the physical structure. An SM machine 170 can be a Computer Numerical Control (CNC) milling machine, such as a multi-axis, multi-tool milling machine used in the manufacturing process. For example, the CAD program(s) 116 can generate CNC instructions for a machine tool system 170 that includes multiple tools (e.g., solid carbide round tools of different sizes and shapes, and insert tools of different sizes that receive metal inserts to create different cutting surfaces) useable for various machining operations. Thus, in some implementations, the CAD program(s) 116 can provide a corresponding document 135 (having toolpath specifications of an appropriate format, e.g., a CNC numerical control (NC) program) to the SM machine 170 for use in manufacturing the physical structure using various cutting tools, etc. For example, in the context of plate-base automated modeling, the manufacturing of the physical structure based on the shape in the corresponding document and the toolpath specification can include 2D cutting processes that rely on laser cutting, plasma cutting, water jet cutting, routing, etc.

In addition, in some implementations, no physical manufacturing may be involved. The systems and techniques described herein are applicable to any suitable 2D or 3D modelling software. Thus, in some implementations, the CAD program(s) 116 can be animation production program(s) that render the 3D model of an appropriate format for visual display.

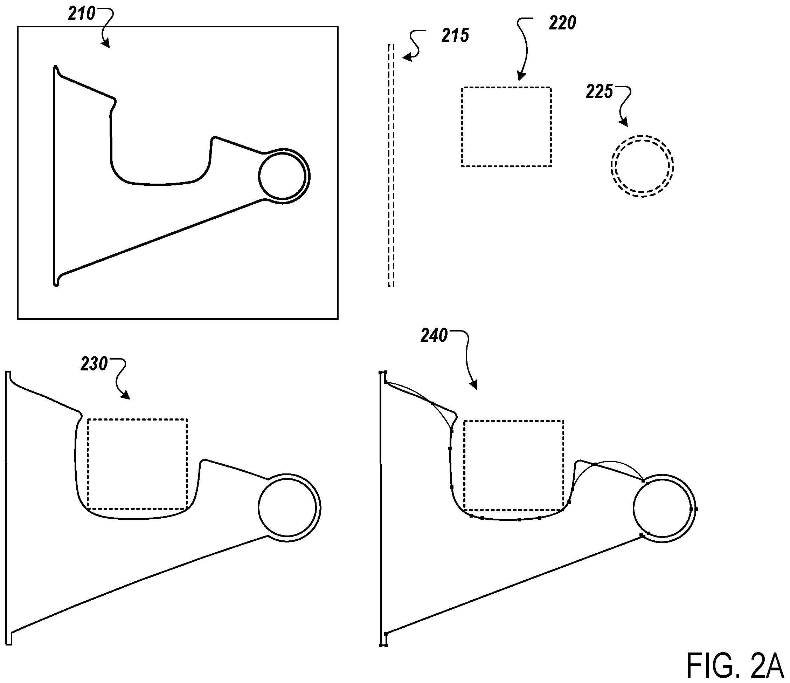

FIG. 2A is an example of a conversion process where an input 2D curve and predefined geometries are converted into a number of 2D primitives based on segmentation and fitting techniques.

In some implementations, the conversion process can be implemented to include sub-processes such as:

- segmentation - a representation of a curve, such as a level-set isoline (or other input curve), can be divided into fixed regions which should follow the exact boundary geometry (e.g., preserve and/or intersection geometry), and free regions which should be fit with new sketch primitives. The segmentation can provide as output segment specifications identifying free regions that are to be approximated during fitting subprocesses.
- optional trimming - trimming operation(s) can take input segmentation specifications as provided by the segmentation and output fixed regions of a final sketch geometry. In some instances, the exact geometry of the boundary geometries (preserves and intersection regions) can be trimmed so that when combined with the free regions, the resulting sketch geometry forms a simple shape (e.g., every junction between primitives is a 2-junction); and
- fitting - in which the geometries of the free regions as provided from the segmentation are each approximated with simple sketch primitives (e.g., one of lines, arcs, circles, ellipse, etc.) while minimizing the number of primitives used. In this way, the overall complexity of the sketch is minimized, which can be one of the goals for the conversion process.

In some implementations, input is provided for the conversion and the input is processed through segmentation and fitting steps, where trimming can be optionally performed. In the current example process, the input is a level-set representation 210 of a shape, however, other representations can be processed in a substantially similar way and the level-set representation is used for the sake of the example. The level-set representation 210 can be for a 2D profile produced by a topology optimization process. A set of preserve curves, preserves 225 and 215, and an obstacle 220 are predefined. The preserve curves are to be included in a final sketch geometry, while the obstacle is to be avoided.

At 230, a segmentation of the level-set contour is performed, where the level-set isoline is divided into fixed regions and free regions. The fixed regions correspond to portions of the preserves 225 and 215 (shown with thicker lines), and the free regions are curves that are to be fitted with simple geometries such as lines, arcs, and circles. As shown at 240, the free curves are fit to simple geometries and merged with preserve curves into a final sketch contour that approximates the input 2D level-set representation 210. Fitting is used to approximate the free regions that connect the preserves with a relatively low number of 2D primitives (at least one of lines, arcs, circles, and cubic b-splines) while avoiding the obstacle 220.

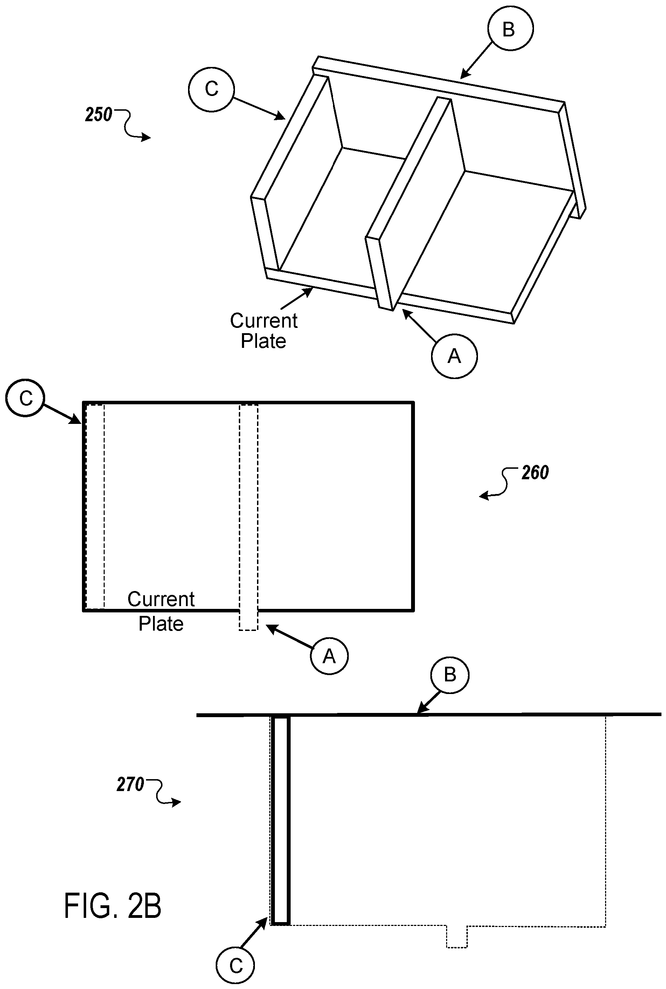

In some implementations, the conversion algorithm as discussed above can be implemented in the context of a plate, whose location (midplane) and thickness are provided by an upstream process. In some implementations, one or more upstream processes provide a set of plates, as described in U.S. Application No. 18/507,958, filed on 13 November 2023 under Attorney Docket No. 15786-0378001, and titled "COMPUTER AIDED AUTOMATED SHAPE SYNTHESIS OF PLATE-LIKE STRUCTURES", which is hereby incorporated by reference in its entirety, where each 2D profile of a plate is used as input from which the primitive sketch geometry is produced. Thus, two or more plates which work to co-create a design may also be present, and intersections with other plates can be taken into consideration during the conversion by creating an "intersecting region", which can be processed in a substantially similar way to a preserve geometry with some limitations, treated similarly to preserve regions with some limitations as described in more detail below. In some instances, when boundary geometries include preserve geometries and intersecting geometries, during the conversion, the intersecting geometries are approximated by explicit approximation with a line or a box (see FIG. 2B). In some instances, the preserve geometries can be approximated, for example, if they have not been provided as exact sketch geometries, where the approximation can be done by fitting to a primitive such as a line, an arc, or a circle, among other examples of simple primitives.

In some cases where generated designs are manufactured by cutting and joining plates of material, a variety of approaches can be used to handle junctions between plates. Often one plate extends over the intersecting region, and another is cut to stop at its top face and is joined by welding or some other means. In other cases, an interlocking geometry is created where the intersecting region between the two plates is alternately occupied by one then the other. In some instances, appropriate profile(s) can be created for detected intersection region(s).

In some implementations, before executing the conversion in some cases, pre-processing of the input data for the conversion may be performed. For example, pre-processing steps can be performed to prepare data for boundary geometries including preserve geometries, obstacles, and any current plate profiles, or intersections, depending on the input provided.

In some implementations, the input 2D curve and the predefined geometries (e.g., 3D geometries) can be provided as input together with a pre-specified plate, for example, specified by a selection algorithm. For a selected plate, a projection of a preserve geometry that intersects the plate at a plate's midplane can be performed. The selection of the plate may be performed by employing an approach similar to the plate selection algorithm as described in U.S. Application No. 18/507,958, filed on 13 November 2023 under Attorney Docket No. 15786-0378001, and titled "COMPUTER AIDED AUTOMATED SHAPE SYNTHESIS OF PLATE-LIKE STRUCTURES", which is hereby incorporated by reference in its entirety. The projection at the plate's midplane may be performed by employing an approach similar to the employed 2.5-axis milling filter as described in U.S Application No. 16/679,065 filed on August 11, 2019, titled "CONVERSION OF GEOMETRY TO BOUNDARY REPRESENTATION WITH FACILITATED EDITING FOR COMPUTER AIDED DESIGN AND 2.5-AXIS SUBTRACTIVE MANUFACTURING", and published on May 14, 2020 as U.S. Publication No. US-2020-0151286-A1, which is hereby incorporated by reference. The 2.5-axis milling filter or another technique can be used to generate a plate's preserve level-set representation, which can be a 2D level set along the plate's midplane.

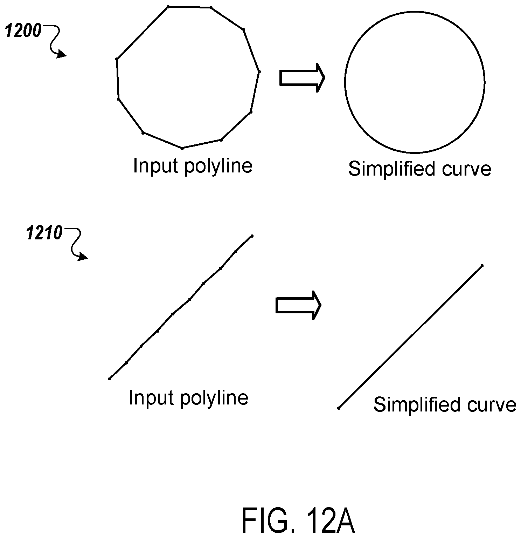

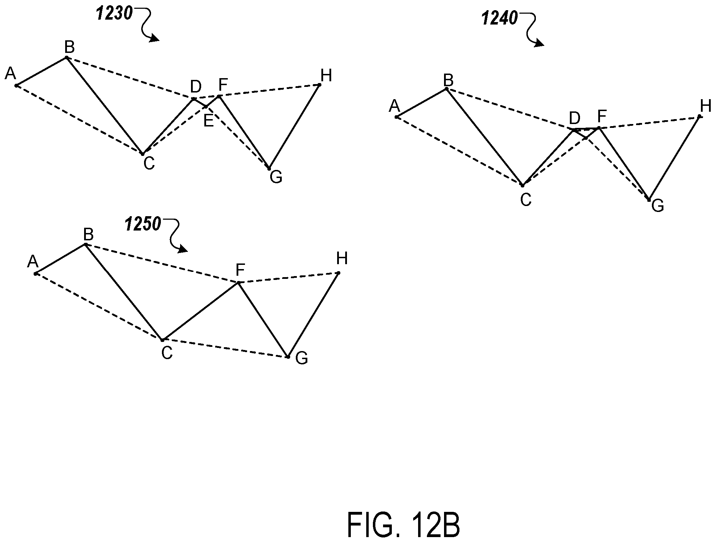

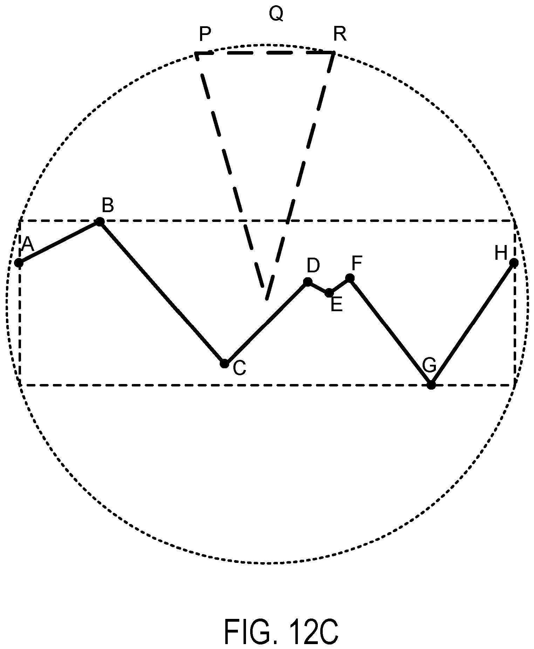

In some implementations, for each preserve, an intersection of the preserve's mesh with the plate's midplane can be computed and a tightly bounded fit can be defined (as described in more detail in relation to FIGS. 12A, 12B, and 12C related to a simplification of a polyline curve as described below) to approximate the intersection with 2D simple primitives including at least one of lines and arcs. In some implementations, two representations of the preserve region(s) can be used, where a first representation can be a level-set representation and the second representation can be a sketch primitive description of the preserve region(s). In some implementations, the two representations can be obtained in different ways. In some cases, a first representation can be selected to be extracted first, and that first representation can be converted into a second representation. In some examples, a level set representation can be extracted first, and a conversion from the level set representation can be done to a sketch representation, for example, by fitting the level set representation with sketch primitives. In some examples, the two representations can be extracted separately and in parallel.

In some instances, a type for the representation of a preserve region that is to be obtained can be defined (e.g., explicitly stating a requested type as input). For example, if a sketch representation is the type that is obtained as input, when a 3D level set representation of a preserve is obtained, a 2D preserve level set representation can be computed and fit to a sketch geometry. As another example, if a level set representation is the type that is obtained, a preserve region can be obtained as a sketch geometry (e.g., from a hand-drawn sketch generated based on user input or when an exact planar slice of the preserve is computed along the sketch plane), and a level set representation can be computed from the input sketch geometry.

In some implementations, an explicit definition of a particular input representation type can be defined, which can be used for computing either the level set representation or the sketch geometry as a second representation. In some instances, a provided representation of a preserve geometry (e.g., a region or a surface) for modeling can be pre-processed by offsetting to generated bodies which can be further classified, as described below.

In some implementations, sections of the preserve's geometry can be classified depending on a region of an extruded preserve from which it is derived. In some implementations, the preserve geometry(s) can be provided as a 2D preserve surface(s). In some cases, the preserve surface(s) can be extruded outwards to produce preserve bodies (for example, the extrusion can be performed to provide bodies that are more suitable for use in topology optimization codes).

The slice curves can be classified as a base surface slice, offset surface slice, or stitching surface slice. The "base surface" slice includes curves in the preserve's slice which correspond to the original input surface selected by the user. The "offset surface" slice includes curves associated with the extruded (offset) face of the preserve body. The "stitching surface" slice includes curves associated with the walls which connect ("stitch") the base and offset surfaces.

In some implementations, in a manner substantially similar to processing input about preserve boundary geometries, for a currently processed plate that is received, intersecting obstacles can be projected onto the plate's midplane to create a 2D level set of obstacles that affect the plate. In some implementations, a current profile of a plate can be pre-processed as previously discussed. To optimize the representation, a level-set representation can be provided based on various algorithms as explained in the present disclosure, where the level set can be cleaned to remove tiny fragments (e.g., identified based on a size criterion) or shards of geometry. The current plate intersects with child plates that add geometry to the plate's profile and do not create an explicit intersecting curve, as discussed further below, where a "child plate" is another plate that ends on a surface of the currently processed plate. In some implementations, the shape of the intersection of all child plates with this plate can be approximated by sampling the level set of the child plate near an intersection region. In some instances, the approximated intersection geometry can be combined with the input level-set representation so that the profile level set is larger than any one of the intersecting child plates, so as to ensure it will terminate on the input plate's face. The plate's profile level set is generated based on the combination, and a zero contour (isoline) can be extracted. In some instances, the level set can be renormalized before the zero contour is extracted without changing the extracted contour. The isoline data is organized into loops, and the isoline is sampled densely (e.g., at a predefined sampling rate) to generate a list of points such that a strip of lines drawn between each successive pair of points describes the zero contour.

In some implementations, the representation can include intersecting regions that can occur when another plate intersects the midplane of the plate inside a design domain. FIG. 2B represents the different types of intersections. Intersections can be of different types and can be handled according to their type as follows - child plate intersections, bounding plate intersections, and owned L-junctions. In a 3D model 250, a child plate (plate A) intersection is presented, as well as other classified intersections such as the plate B and the plate C. The current plate is the flat plate on the bottom of the 3D model 250 and is intersected by a plate A that is the child plate. Plate B of the 3D model 250 is a bounding plate, and plate C of the 3D model 250, where the intersection of the current plate with plate C is an example of an "owned the L-junction" in the current plate. The child plate intersections are intersections that "dead-end" into the current plate in a "T" configuration. The approximate representation of these intersection regions is included in the plate profile and no explicit intersecting geometry is created. Bounding-plate intersections act as boundaries on the domain of the current plate profile. The boundaries generate a line along the contact between the bounding plate's top face and the current plate's midplane that extends throughout the domain. These boundaries can be enforced in level-set processing, e.g., by a prismatic filter as described in U.S Publication No. US-2020-0151286-A1. Owned L-junctions act as both child and bounding plates. The approximate intersection footprint is added to the plate profile and a box around the approximate intersection footprint is also added to the intersection geometry.

FIG. 2B shows with 3D model 250 an example of a plate configuration where the current plate (bottom plate) is intersected by one plate in each of the configurations above. The child plate intersection A adds geometry to the plate's profile, as with the box defined for A at 260 and does not create any explicit intersecting curves. Plate B bounds the current plate. Plate B does not change the current plate's profile, as shown at 270 of FIG. 2B, as plate B generates a line along the contact throughout the domain. The line associated with B at 270 acts as a form of preserve in the context of executing segmenting and trimming subprocesses as part of the conversion. Plate C, as shown at 260 and 270 of FIG. 2B has an owned L-Junction relationship with the current plate, which causes it to add an approximate footprint box to the current plate's profile as well as a box to the intersection geometry, as shown at 270.

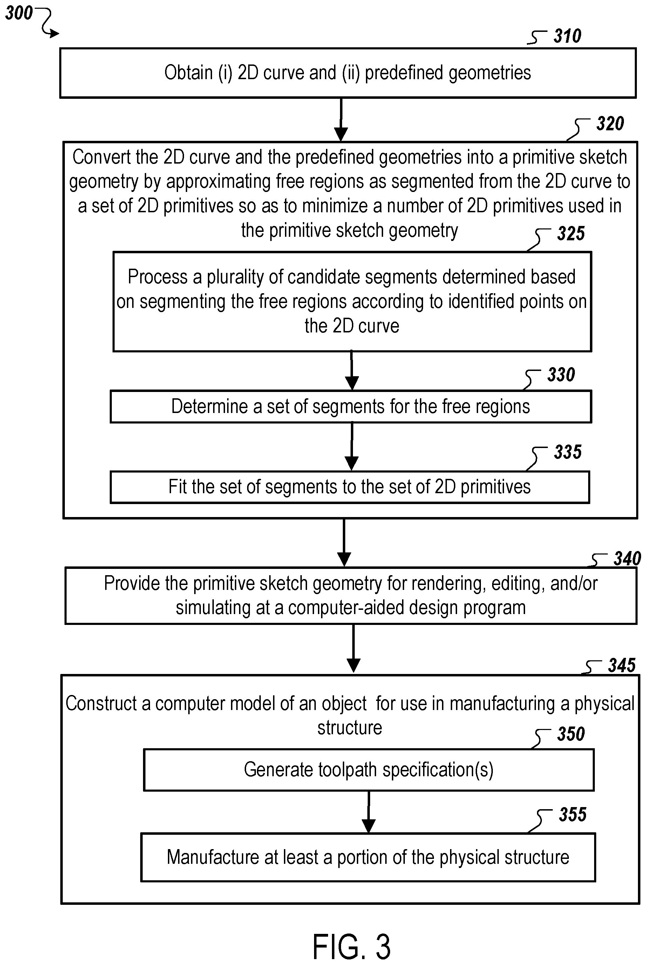

FIG. 3 is an example of a process 300 for converting a 2D curve and predefined geometries into a primitive sketch geometry with a minimized number of 2D primitives in accordance with implementations of the present disclosure. The process 300 can be implemented in the context of approximating shapes with 2D sketch primitives when applied in the context of automated modeling, generative design, topology optimization, as well as sketch automation.

At 310, a 2D curve and predefined geometries are obtained for conversion. The obtaining includes obtaining a representation including a set of connected points that describe the 2D curve. For example, the representation can be as shown at 210 of FIG. 2A. The set of connected points describes an input intent to define a shape, which can be provided by different means and in different formats. In some implementations, the points are derived from a geometry representation generated from an automated modeling implementation. In some implementations, the geometry representation can be a level-set representation and the set of connected points are sampled on a zero contour of a level-set representation of a 2D profile of a plate that is generated based on an automated modeling-plates solver to perform a shape synthesis process of a 3D geometry of a part according to boundary conditions. In some implementations, the points are derived from a hand-drawn representation of a curve.

At 320, the 2D curve and the predefined geometries are converted into a primitive sketch geometry. Free regions are segmented from the 2D curve and approximated to a set of 2D primitives so as to minimize the number of 2D primitives used in the primitive sketch geometry.

In some implementations, the 2D curve is segmented into free regions and fixed regions as discussed in the description of FIG. 2A. The fixed regions are defined based on the predefined geometries that include a boundary geometry. The boundary geometry includes input preserve geometries and optionally, obstacle(s).

The conversion of the 2D curve includes processing, at 325, a plurality of candidate segments determined based on segmenting the free regions to determine a set of segments that are to be fit to 2D primitives. The free regions are segmented into multiple candidate segments determined according to identified points on the 2D curve that meet a threshold for curve contact with a geometry of the predefined geometries. The candidate segments are evaluated to determine the set of segments at 330. At 335, the set of segments of the free regions are fit to the set of 2D primitives. In some instances, the fitting of the set of segments includes selecting a 2D primitive of a primitive type to approximate a sequence of segments of the representation of the 2D curve by minimizing an error measure associated with the selected 2D primitive.

In some implementations, the conversion of the 2D curve and the predefined geometries includes assembling the set of segments from the free regions fitted to the set of 2D primitives and at least a portion of the predefined geometries (or all of the predefined geometries) to obtain the primitive sketch geometry. As such, the 2D primitives are determined to maintain contact with the predefined geometries.

At 340, the primitive sketch geometry is provided for rendering, editing, and/or simulating at a computer-aided design program. The provided sketch geometry can be modified or used "as is" for construction of a 3D model for use in manufacturing. User input for the modifications of the sketch geometry can be received based on rendering the sketch. In some instances, modifications to the sketch can be performed with improved user experience, faster, and with fewer computation resources to process the request for modifications and generate a finalized output.

At 345, based on user input, the provided sketch geometry (in initial or modified state) can be provided to construct a 3D model of an object for use in manufacturing a physical structure of the object using one or more computer-controlled manufacturing systems. In some implementations, the sketch geometry can be directly used for manufacturing, for example, by using it to generate a toolpath specification as instructions for a machine to manufacture the shape from a piece of material. In some implementations, the sketch primitive geometry is a 2D geometry that is extruded into a 3D model of an object to manufacture a physical structure. The 3D model of the object can be used to generate a toolpath specification and to use it to manufacture the physical structure based on different manufacturing processes (e.g., additive manufacturing or subtractive manufacturing), executed by a manufacturing machine, e.g., additive manufacturing (AM) machine(s) and/or subtractive manufacturing (SM) machine(s) 170 of FIG. 1.

The resulting sketch geometry can be presented to a user, such as the user 160 of FIG. 1, and can be rendered at a user interface, e.g., in UI 122 on display device 120, as shown at FIG. 1, along with an option to accept or reject the design. For example, a 3D model can be constructed based on user input and presented to the user 160 in UI 122. In some implementations, user input to modify the sketch geometry can be received, for example, within a user interface of a CAD program, such as the CAD program(s) 116 of FIG. 1. The sketch geometry can be easily modified (as including simple primitives and less complex structure) and the end result geometry can be stored. The resulting 2D geometry can be used by the CAD program to extrude the sketch into a 3D model object and to render that model on a user interface for viewing. In some cases, the extrusion settings can be modified, thus to provide particular characteristics such as particular thickness in the third dimension. The modifications to the extrusion settings can be user-defined or can be automatically obtained from an external service or application, e.g., associated with evaluating the model for manufacturing. The generated 3D model object from the sketch can be used for further editing and/or simulating based on user instructions.

Once a design is approved, the constructed 3D model can be sent or saved to a permanent storage device for use in manufacturing the physical structure corresponding to the object using computer-controlled manufacturing systems.

In some implementations, the construction 345 of the computer model of the object for use in manufacturing involves generating 350, e.g., by CAD program(s) 116, toolpath specifications for the computer-controlled manufacturing system(s) using the 3D model, and manufacturing 355 at least a portion of the physical structure corresponding to the object with the computer-controlled manufacturing system(s) using the toolpath specifications.

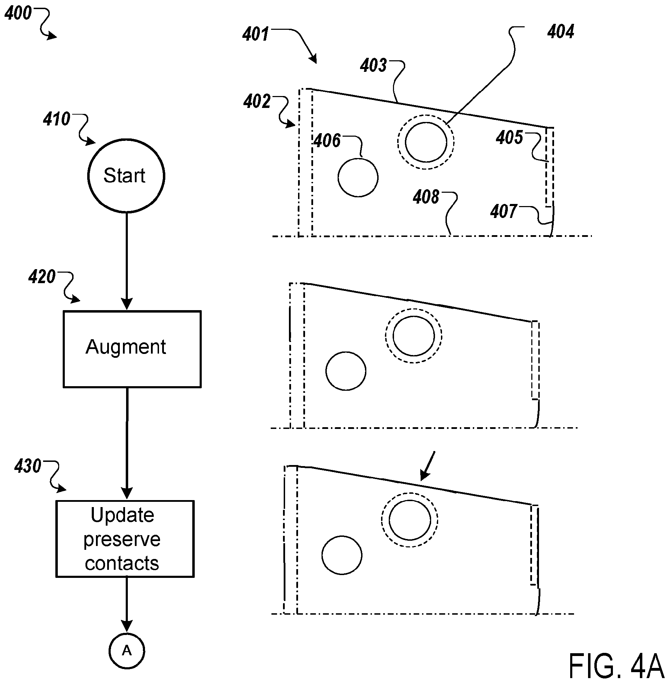

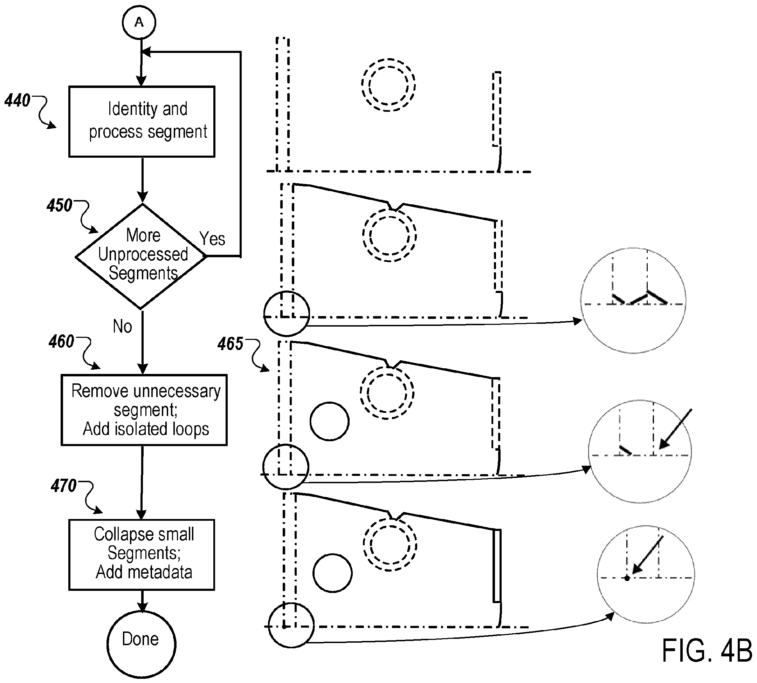

FIGS. 4A and 4B show an example process 400 for segmentation of a representation of a 2D curve and predefined geometries as input for conversion to a sketch geometry in accordance with implementations of the present disclosure. The segmentation process can be performed based on different representations of the 2D curve as described in the present application. In some implementations, a shape can be defined in various ways as described in the present disclosure, for example, as a result of a generative design process, as a hand-drawn curve, or other. In some instances, a representation including a set of connected points that describes a 2D curve can be obtained as well as boundary geometries including input preserve geometries. Optionally, intersections can be received as input for performing segmentation. For example, the input for the segmentation can be a level-set representation created by topology optimization by a prismatic filter that represents a single sketch for an extrusion in a welded plate design. In another example, the input can be a hand-drawn curve, or a geometry representation obtained through sketch automation or automated modelling.

The segmentation process described in relation to FIGS. 4A and 4B is related to processing of a level-set representation for the sake of the example, but substantially similar operations are associated with the segmentation if the representation is another geometry representation without limitations to a level set. Based on executing the segmentation, a list of segment specifications can be provided that includes information for free regions of the design which can be approximated during the fitting step, as discussed in relation to FIG. 2A. As previously discussed, trimming can be an additional process that is optionally performed once the list of segment specifications is provided and before the fitting.

In some implementations, segmentation can be performed on a representation of a 2D curve as a set of connected points, where the representation is segmented into fixed regions and free regions. The fixed regions are defined for the boundary geometries such as preserves, obstacles, and/or intersections. The free regions segmented from the 2D curve can be evaluated to determine a set of segments, which are to be fitted to a set of 2D primitives, as discussed in relation to FIG. 3.

In some implementations, the segmentation can be performed by analyzing an isoline extracted from a level set of a current plate's profile (e.g., as discussed in relation to FIG. 2B). During segmentation, some pieces of the isoline are identified as fixed geometries that can be replaced with a portion of the exact boundary geometry (e.g., preserve and intersection curves), and other regions are identified as free geometry which will be approximated to 2D primitives during a fitting process. In some instances, one free region is used to create one segment specification and can be added to the list.

The implementations of the present application related to segmentation enable the creation of an explicit, parametric, and high-quality geometry for modeling preserve regions, rather than relying on poorly fitted guesses to approximate the preserve region. Based on executing such segmentation, the fitting processes can be significantly simplified, as the segmentation can provide "neighbor" information about adjacent boundary curves such as tangents.

FIGS. 4A and 4B represent a flow of operations, where at 410, input for the segmentation is provided. As discussed previously, the segmentation can be performed based on an obtained 2D shape(s) and predefined geometries. The obtained 2D shape(s) can be obtained as a set of connected points (e.g., based on a hand-drawn curve, as sampled on an isoline contour of a level-set representation of a 2D profile of a plate based on an automated modeling-plates solver to perform a shape synthesis process of a 3D geometry of a part according to boundary conditions, e.g., as discussed in relation to FIG. 2B). The predefined geometries include intersection and preserve geometries as well as other 2D and/or 3D geometries that can be obtained to initiate the segmentation shown at 401. The intersection geometries include the box 402 and the line 408. The preserve geometries are presented with a dash-lined pattern and include the loops 404 and the box 405. The 2D shape at 401 in this example is a zero contour of a level set that includes a first loop that goes along the line 403, the external boarder of the preserve box 405, the curve 407, along the line 408, and around the external part of the box 402 until it connects to the beginning of the line 403, and a second loop that matches curve 406.

The segmentation process includes obtaining of initial input at 410, augmentation 420 that includes defining of attributes to each point on the 2D curve (e.g., an isoline), updating 430 of preserve contacts to adjust the tagging of the points to account for preserves which are close but not do not touch the isoline, identifying and processing of segments at 440, which is iteratively done by going through each segment until all are processed (at 450), removing unnecessary segments and adding loops at 460, and collapsing (at 470) small segments to generate a list of segment specifications that is to be used for approximation with 2D primitives. The process 400 is associated with an input curve that is a 2D curve, which can be for example an isoline. The description below related to the process 400 of FIGS. 4A and 4B (and generally) is associated with the input curve, where for the sake of the example, an isoline is used as one specific example of the input curve, where other options are available, and such example does not limit the present disclosure to use of an isoline.

**Augmentation**

At 410, each point in the isoline is analyzed and tagged with information about the proximity of the point to a boundary geometry such as a preserve or intersection object. When the level-set representation and the boundary geometries are processed, the augmentation step is initiated at 420. In some implementations, points of the level-set representation are analyzed by selecting first regions as fixed regions (that are to be replaced with exact portions of a boundary geometry) and second regions as free regions (that are to be approximated with 2D primitives). The free regions are processed to determine candidate segments based on the segmentation and to evaluate relative proximities between determined candidate segments and the boundary geometries according to an inclusion criterion.

In some implementations, the processing of the free regions can include tagging each point of the isoline based on proximity of a respective point to a boundary geometry. In some implementations, the proximity is determined according to a first threshold contact distance.

In some implementations, the regions on the boundary geometries can be evaluated to identify regions on each geometry as either "contactable" or "non-contactable" depending on whether a segment determined from the segmentation process should be allowed to end on a given region of the boundary geometries. In some implementations, "non-contactable" curves can occur when a preserve slice includes two loops, one of which is sliced from the base surface. If the base surface forms a loop and more than one loop is present in the preserve slice, the base surface can be evaluated as "non-contactable". For example, a user-selected preserve face which is a cylinder perpendicular to the 2D sketch plane that can be extruded to produce an annular shape, and the shape can be sliced to form the two loops - an outer offset surface slice (an outer circle) and an inner base surface slice (an inner circle). In that example, since the base surface forms a closed loop (the inner circle) and also there is more than one loop (the outer circle and the inner circle of the base surface) extracted from the preserve, the base surface can be classified as "non-contactable," and the outer loop can be classified as "contactable" (the outer, offset circle is contactable). During augmentation at 420, each 2D curve point is labeled based on its proximity to "contactable" boundary curves (excluding non-contactable ones). In some instances, a distance between a point on the 2D curve and the nearest contactable point and the nearest non-contactable point can be computed and tracked. Such computation and tracking can be performed for each point on the input curve. In some cases, the distance to the nearest contactable point is evaluated and used to set a "touching" flag for the point (only that distance and not the distance to the nearest non-contactable point), while the minimum distance to the boundary curve (either contactable or non-contactable) is used to determine whether the point is to be flagged as "far", so that 2D curve points cannot be classified as "touching" a non-contactable bounding curve, but they also are not to be classified as "far" from the boundary at that point.

**Update preserve contacts**

In some implementations, based on the augmentation at 420, points on the isoline are classified as touching contactable boundary geometries. In some cases, the level set can enclose a preserve, but may not get close enough to register a contact. In some implementations, it can be evaluated whether there are preserves that would not be contacted by any point of the isoline and to evaluate whether to consider them as touching by reducing the threshold for these preserves until contact can be made with the isoline, or to allow the maximum threshold distance under the touching criteria to be reached. At 430, an update to the tagging is performed based on considerations of a loosened touching criterion. The evaluation to update the tagging does not change an actual contact, but rather is to update the classification for points as touching based on a loosened criterion.

In some instances, a point of the representation can be evaluated and tagged as touching when a distance between the point and a boundary geometry is below the threshold contact distance. In some instances, each point of the isoline can be tagged to account for the boundary geometries that are close to but not touching the isoline. The points can be classified into categories including far, neutral, and touching based on the distance to the bounding curve. When a point is classified as touching, the point can be considered as touching even though it is not in fact touching but is within a threshold distance to the boundary geometry line. In some cases, the point can be classified as being far if the distance from a point on the isoline to a boundary geometry is above a second threshold distance, that can be different from or similar to the first threshold distance used for determining that the point is touching. A point can be classified as neutral if it falls within neither the criteria for the touching nor for being far, e.g., it is positioned in a location between the first and second threshold distances. In some implementations, a point can be classified as "touching" a bounding curve if it is less than a specific fraction of a voxel size (e.g., 0.51) away from the nearest contactable bounding curve. Note that the voxel size can be determined by the overall size of the design domain. In some implementations, points can be classified as far if they are at least three voxels away from the nearest contactable or non-contactable bounding curve.

In some implementations, the points on the isoline curve are iteratively evaluated based on the tagging of the points to determine the plurality of candidate segments of the isoline. In some implementations, the plurality of candidate segments is processed based on iterating over the points to iteratively extract segments of the determined plurality of candidate segments that meet an inclusion criterion. In some implementations, the inclusion criterion specifies that a candidate segment is to be selected for inclusion in the set of segments when the candidate segment either connects two different boundary geometries or includes a point that is tagged as not being in contact with a boundary geometry, as having a distance to a boundary geometry above a threshold contact distance (e.g., categorized as being far).

In some implementations, based on the segmentation, segment specifications are generated that include the generation of metadata for the extracted set of segments to generate a list of segment specifications for the set of segments. In some implementations, the generation of the metadata includes initializing an entry into the list of segment specifications to include the generated metadata for the respective segment upon determining that a candidate segment meets the inclusion criterion and is to be included in the segment specifications provided as output from the segmentation process 400.

**Iteratively process segments**

After the augmentation 420 and update 430 procedures are completed, identification of a plurality of candidate segments can be performed at 440, where segmentation is performed for each successive loop of the isoline as follows. The plurality of candidate segments is determined by evaluating points on the isoline based on the tagging of the points based on the update for the preserve contact.

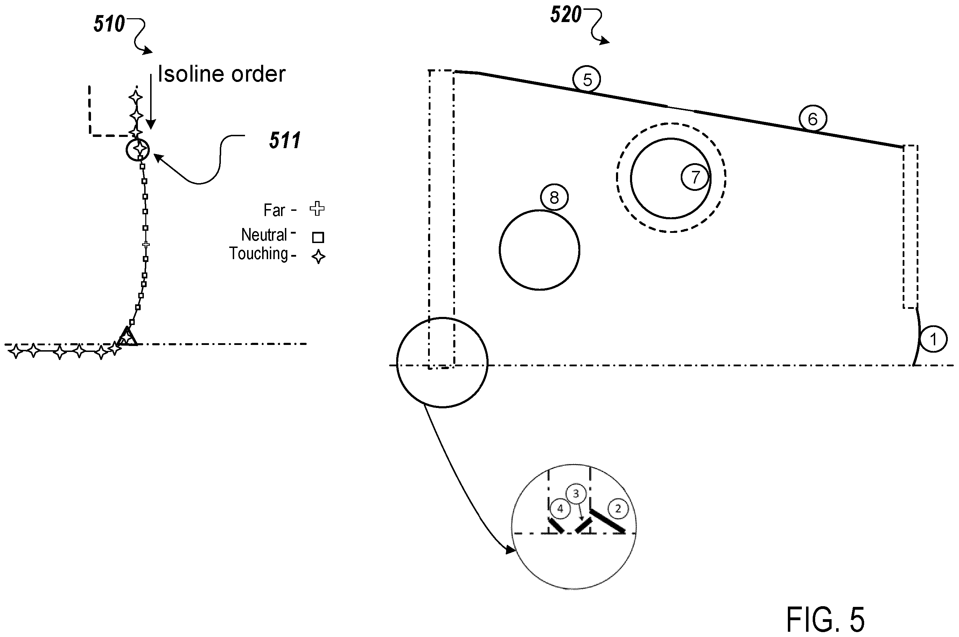

In some implementations, a first candidate segment is determined by determining a start and end point for the segment. An example of an isoline with a labelled start and end index is shown in FIG. 5.

The start point for the segment is determined as a point tagged as touching a boundary geometry and where a next point on the isoline is either not touching a boundary geometry or touching a different boundary geometry. The end point for the segment is determined as a successively iterated point from the set of connected points on the isoline that is touching a boundary geometry. The segment between the start point and the end point can be determined as the first candidate segment. In some implementations, the determination of the candidate segments can be done iteratively, where, for a next candidate segment, a subsequent start point is determined based on iterating on points subsequent to the end point as determined for the first candidate segment.

In some implementations, an additional check can be done for the candidate segment to determine whether the segment is to be included in the final list of segments that are to be fit with primitives. The candidate segment can be evaluated to determine whether the segment connects two different bounding curves (i.e., bounding curves from different preserves or intersection entities), or whether it includes a far point in its domain. If a candidate segment does not pass one of these checks, it is rejected. Accepted candidates are used to initialize a new entry in a list of segment specifications that forms the output of the segmentation algorithm 400. In some implementations, the segment specifications can initially include the points on the isoline which make up the candidate, as well as information on the isoline loop from which they were derived and the identity of the previous/next segment in the loop. Additional information attached to each segment specification entry can be populated upon initialization of the entry or at a later point in time.

In some implementations, it is determined whether there is at least one isolated loop that meets an inclusion-loop criterion, where the inclusion-loop criterion defines a threshold distance from the boundary geometries, according to which each isolated loop is to be considered for inclusion in the plurality of candidate segments. If it is determined that there is an isolated loop that meets the inclusion loop criterion, the isolated loop is added to the plurality of candidate segments in response to determining that the isolated loop that meets the inclusion loop criterion encloses an area above a threshold size area to be added as a candidate segment.

In some cases with isoline loops, no start index can be identified, either because the isoline points are never in contact with a bounding curve or because they are only in contact with a single bounding curve. In some implementations, when evaluating these loops, it can be considered whether to include these loops or discard them. For example, logic can be implemented to discard isolines that are approximating bounding curve geometries (such as the interior of a hole created by a cylindrical preserve surface) and noisy fragments (such as a tiny bit of geometry floating in space). In other cases, loops which represent holes caused by an obstacle can be kept. In some instances, a loop can be defined as an "isolated loop" when the loop is at all points at least a first threshold number of voxels (e.g., 1.02 voxels) away from all bounding curves (contactable and non-contactable). Further, isolated loops can be required to enclose an area of at least a second number (e.g., 1.5) of square voxels. In some implementations, if an isoline loop has no start index and passes the isolated loop criteria as described, the isolated loop can be added as an entry to the list of segment specifications. Turning to the example of a segment with a start and end index labelled of FIG. 5, an example of an extraction of a candidate segment is now described. When a first evaluation for determining a candidate segment is performed, points are evaluated iteratively, for example, as shown at 510, that shows a portion of the points of the isoline shown at 520, that corresponds to the processing described in relation to operation 440 at FIG. 4B.

In some implementations, during extraction of candidate segments, the points are iteratively processed, and a first start point for a candidate segment can be determined as start point 511. The start point 511 in a candidate segment (noted by a circle in the figure) can be determined as the last isoline point that is touching the preserve before proceeding to open space. The end point is found by traversing along the isoline points until the next point which is tagged as touching the object (e.g., according to the tagging and updating with respect to preserve contacts as explained in relation to 420 and 430 of FIG. 4A). The isoline points between start and end (inclusive) are used to initialize a candidate segment. At 520, the points of the isoline are iteratively evaluated and multiple segments are extracted, for example, as described in relation to operations 440 and 450 of FIG. 4B. At 520, the segments of the shape are annotated with numbers from 1 to 8, where:

- (1), (5), and (6) show normal (typical) segments,
- (2) and (3) show unnecessary segments,
- (4) shows tiny segment,
- (7) shows unused loop, and

(8) Isolated loop. When the candidate segments are defined, they can be evaluated to determine the set of segments that is to be provided for the fitting. In some instances, some segments can be considered as unnecessary (see 460 of FIG. 4B), some small segments can be collapsed (see 470 of FIG. 4B) to a point and metadata can be added to the segments to generate the set of segments that is provided as output from process 400. In some implementations, the candidate segments can be iteratively evaluated to perform at least one of:

- identifying one or more segments to be removed from the plurality of candidate segments (see 460),
- identifying an additional segment to be added to the plurality of candidate segments (e.g., add isolated loops as discussed above), and/or
- identifying at least one segment to be collapsed to a single point (see 470).

**Modify segments and remove unnecessary segments**

At 460 of FIG. 4B, when segments are identified and provided from the operations at 440 and 450, these segments can be evaluated to determine whether some segments can be removed. In some implementations, after creating the candidate segments as an initial set of segments, the candidates can be processed to determine if there is at least one segment that is to be modified to ensure connection of the segment to the boundary geometry.

In some implementations, at least one segment of the candidate segments is modified to ensure connection. In some implementations, the modification includes determination for a given candidate whether a point that is tagged as touching the boundary geometry is connecting the boundary geometry. When it is determined that the candidate segment that includes a point that is tagged as touching the boundary geometry does not connect with the boundary geometry, the candidate is modified to include a point that actually is in contact with the boundary geometry. In some implementations, during the modification, additional characteristics for the segments can be computed and added as metadata, where the metadata can be used subsequently in the fitting phase. In some implementations, modifications of a segment can be made to adjust the contact with the bounding geometry in a natural way so that an algorithm is applied to each end of a segment as a sequence of points to modify the segment.

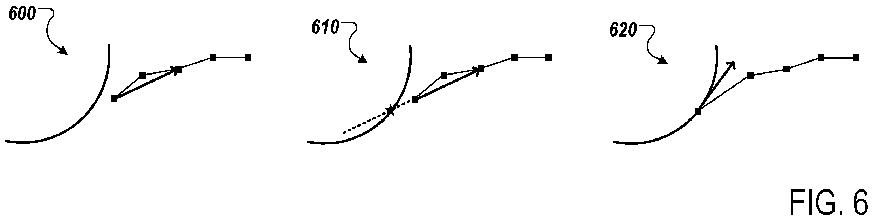

FIG.6 shows two example setups to draw an incident vector and to modify a segment to ensure connection of a candidate segment to an object. At 600, 610, and 620 of FIG. 6, the points shown as dots are isoline points including a candidate segment. A vector (shown at 600) is drawn from the endpoint to one of several points down the list. This vector is the "incidence vector" and describes the direction the isoline was travelling near the end of the segment. A search can be conducted along the incidence vector forward and backwards to determine an intersection with the boundary curve (marked with a star in 610). Once the contact point is established, the endpoint is moved to the contact point and the tangent along the boundary curve at the contact point (shown at 620) is computed. The tangent can be stored as part of the metadata for the segment to provide "neighbor" information in the segment specification that can be used during the fitting operations.

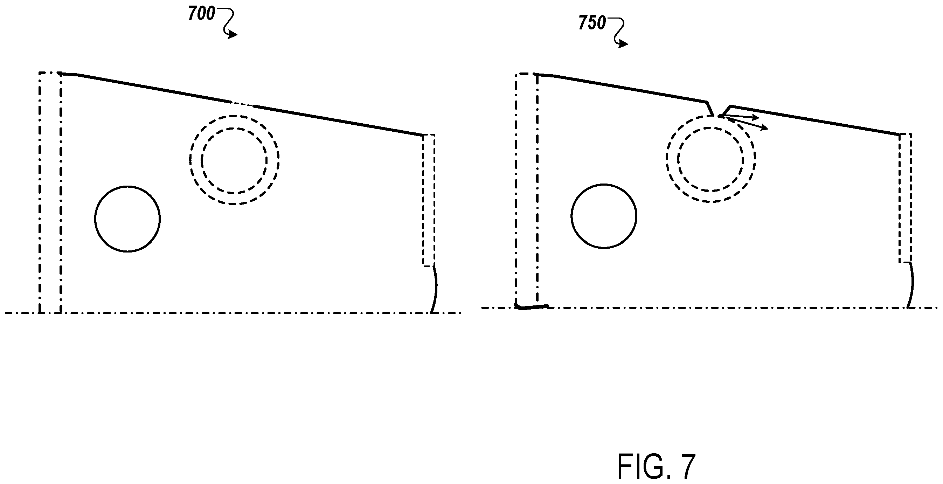

Turning to the example of FIGS. 4A and 4B, the segments before and after connecting the endpoints to objects as shown at 465 of FIG. 4B are shown in more detail FIG. 7. At 700, the segments are shown before connecting to objects, while at 750, the segments are shown after connecting, together with tangents shown as arrows. It is to be noted that in the present example, only the segment endpoints contacting the circles are assigned tangents, however, tangents are not limited to be assigned on circles only and other assignments of tangents are possible in some implementations. Segments do not receive tangents when they contact intersecting geometry, and the tangents at the two other segment endpoints that contact the rectangular preserve are not stable as one moves along the preserve curve (because the curve has a sharp corner nearby), so they can be discarded.

Turning back to FIG. 5 where at 520 all candidate segments are extracted, these candidate segments can be evaluated to determine whether they are to be modified to ensure connection (as described in relation to FIG. 6), or if unnecessary segments should be removed or collapsed, and/or metadata added, as described in further detail in relation to operations 460 and 470 of FIG. 4B.

In the example 520 of FIG. 5, the following can be noted for each segment that is identified, from the segments annotated from 1 to 7:

- Segments (1), (5), and (6) are typical segment examples. They each contain a far point and transition between two bounding curves (preserve-preserve or preserve-intersection).
- Segments (2) and (3) can be evaluated and determined as unnecessary segments (see more details related to operation 460 of FIG. 4B); it can be noted that segments (3) and (4) share an endpoint.
- Segments (2), (3), and (4) are examples of small segments which can be collapsed (discussed in relation to operation 470 of FIG. 4B).
- Segment (7) is an example of an isoline loop with no start index (every entry in the loop is touching a single preserve). Because it is close to a preserve (a non-contactable preserve loop overlaps it), it may be determined not to be an isolated loop and can be identified as an unused loop and not added to the list of segment specs, e.g., this candidate segment can be removed as unnecessary.
- Segment (8) is an example of an isolated loop. It has no start index (never gets close enough to a preserve) but passes the isolated loop test, thus, the loop is added to the list of segment specs.

At 450 of FIG. 4B, the evaluation of the segments continues to iteratively determine the plurality of candidate segments in response to the iterative evaluation of the points on the isoline and loops. The candidate segments are to be evaluated to determine whether they should be removed from the set of candidate segments. In some cases, the generated list of candidate segments can include segments that form unnecessary pairs.

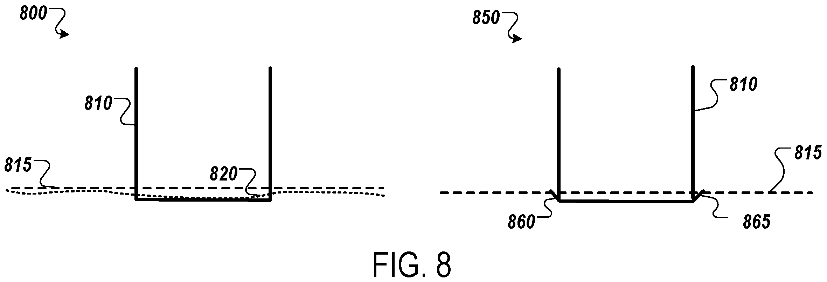

Turning to FIG. 8, an example 800 of unnecessary segments for an isoline 820 (shown with dotted-line pattern) that forms a path nearly equivalent to two boundary curves (preserve box 810 and an intersection line 820). Two candidate segments 860 and 865 are generated in this example, which can cause an output sketch fit generated from the isoline 820 from such segmentation to go along the intersection line 820 (shown with long-dash line pattern), hop to the preserve box 810 (shown with a solid line), then back to the intersection line 810, as shown at 850. In order to reduce the number of primitives in the output sketch, it may be preferable that these segments 860 and 865 both be removed, and the final sketch remain only on the intersection line 820. In some implementations, determined candidate segments can be evaluated to detect whether pairs of segments with an A-BB-A boundary curve pattern exist, and whether removal will reduce the number of primitives, thus reducing the complexity of the sketch that can be converted from the input curves.

In some cases, an A-B/B-A segment pair should not be removed, for example, when two small segments still transition the sketch curve from an intersection to a preserve then back to the intersection, but the isoline moves far from the intersection line, such that removing the segments and letting the sketch follow the intersection would not accurately reflect the input level set. As such, when defining rules to remove unnecessary segments, such pair segments can be considered for removal when they are relatively small and have points that stay close to the original bounding curve, so that intersecting geometry is not removed. Additionally, the bounding-curve region between the two segments can be defined to remain relatively close to the isoline, for example, within a threshold range, in order for it to be a good approximation. Such considerations for removing unnecessary segments can be configured with particular thresholds and applied when processing candidate segments.

In some implementations, a rule for evaluating candidate segments and determining whether they are unnecessary segments can be implemented. The rule can include a consideration of the currently reviewed segments and one or more subsequent segments in the list of candidate segments. In some implementations, when the input for the segmentation process 400 includes intersecting geometries, the processing of candidate segments can include an evaluation of a next-in-sequence segment from the list of segment specifications for a subsequent candidate segment, removing the respective candidate segment and the next-in-sequence segment in response to determining these segments as unnecessary based on determining that:

(i) the respective candidate segment begins on a same boundary geometry where the next-in-sequence segment ends,
(ii) the distances between 1) points on the respective candidate segments and points on isoline regions between candidate segments and 2) points on the original boundary geometry are within a threshold distance of closeness to collapse the respective candidate segment, and
(iii) a distance between a set of points sampled from the boundary geometry that are between contacting endpoints of the respective candidate segment and the next-in-sequence segment is within a threshold distance to a predefined point.

## Collapse small segments and generate specification including metadata

At 470, it is evaluated whether the candidate segments include small segments that can be collapsed to zero-length.

In some cases, these segments will not represent geometry in the final sketch but can potentially signal the trimming procedure, if such is included, to create a junction and break and trim bounding curves at this point. In some implementations, segments from the candidate segments that are below a threshold length can be identified. For those subsets of segments, a bounding curve attached to each end can be determined and it can be verified if there is an intersection between those. In other words, it can be determined whether there is an intersecting geometry that is in contact with points between the end points of the respective small segment. In response to determining that the intersecting geometry is in contact with a point that is within a threshold distance from a midpoint of the respective segment, the respective segment can be collapsed on the point of contact.

The Segmentation process of 400 can provide a list of segment specifications that include metadata with information about each segment as determined and selected from the candidate segments. In some implementations, the metadata can be generated upon determination that a candidate segment meets inclusion criteria, and an entry can be initialized into the list of segment specifications to include the metadata. For example, the metadata can include information as follows:

- The points on the isoline which were used to create the segment (with endpoints adjusted to contact the adjacent bounding curves).
- Information on the start and end neighbors, bounding curves attached to each end of the segment (described below).
- An outside direction estimation, which describes which side of the curve is "outside" the shape according to the level set.
- The identity of the next segment found in this isoline loop.
- The index of the source isoline loop.

In some implementations, the outside direction can be estimated by traversing along the isoline and taking the cross product of the gradient of the level set with a vector connecting successive (groups of or individual) points on the isoline. If the cross products are net positive with an acceptable confidence level, then the outside is to the right as one stands at the start point and looks along the segment, and vice versa. If the outside direction cannot be established at the required level of confidence it is left as "unknown".

The start and end neighbors each include some of the following information:

- The kind of boundary curve (preserve, intersection, or none).
- The identity of the boundary curve.
- The tangent if it is available and stable as described above.
- The incidence vector used in the contact snaping at an intersection with the boundary curve (see e.g., the star at the boundary curve at 610 of FIG. 6) and tangency computations.
- An isolated loop segment has the kind attribute for the start and end neighbors set to "none".

In some implementations, the method 400 includes providing of segment specifications, where each segment specification includes information associated with points on an isoline extracted from the level-set representation that were used to determine a respective segment, information about start and end neighbor points on boundary geometries in contact with each end of the segment, outside direction predictions defining a side of the isoline that is outside of a shape defined according to the level-set representation, identification of a next segment found in a same isoline loop, and the identity of a source isoline loop to determine the respective segment.

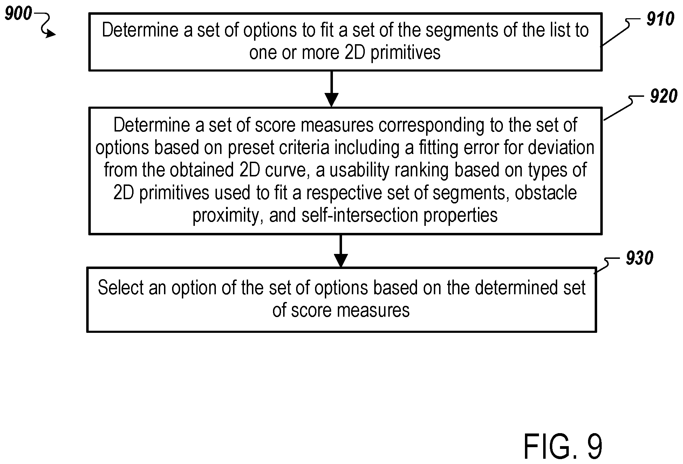

FIG. 9 is a flow diagram of an example method 900 for fitting a set of segments based on segment specifications in accordance with implementations of the present disclosure.

In automated modeling, a user can specify surfaces to connect (also called preserves) and bodies to avoid (also called obstacles). This information can be leveraged to create sketches that fit well with the user's requirements. As previously discussed, the curve geometry from the preserves can be extracted from the user's input. The input for sketch creation as described, for example in relation to FIGS. 2A, 3, 4A, and 4B is a curve that includes connected points and can be a polyline that is extracted from the two-dimensional level sets. Based on segmentation of the input, as discussed in relation to FIGS. 4A and 4B, the portions of the obtained input that coincide with preserve curves can be replaced by the preserve curves based on the segmentation (and optional trimming), while free regions can be approximated by the segment fit curves.

The problem of sketch creation can be broken down into two parts as shown below.

- Extraction of preserve curves. These are typically analytical curves such as lines, arcs, circles, etc.
- Construction of curves that approximate polylines which connect preserve curves. These are termed as segment fit curves.

At 910, a set of options to fit a set of the segments of the list to one or more 2D primitives is determined. At 920, a set of score measures is determined corresponding to the set of options based on preset criteria including a fitting error for deviation from the obtained 2D curve, a usability ranking based on types of 2D primitives used to fit a respective set of segments, obstacle proximity, and self-intersection properties. At 930, an option of the set of options is selected based on the determined set of score measures.

In some implementations, when fitting the set of segments as provided from the segmentation process, it can be iteratively determined whether to approximate a set of line segments which form a connected subset of segments of the isoline with a primitive of a given type, such as a line, an arc, a circle. The approximation can be done based on evaluations with respect to a predefined maximum error threshold measure corresponding to a respective type of the primitive types. In response to determining that approximating the set of successive segments with each of the primitive types of the group is associated with an error above the predefined maximum error threshold measure for approximation, the set of successive segments can be approximated to a four-control-point B-spline.

**Primitives for segment fit curves**

In some implementations, when converting a curve and predefined geometries to a sketch, as discussed throughout the application, highly editable sketches can be constructed that include primitives to connect preserve curves, where the primitive number is minimized, and complexity of the sketch is maintained as low. In some implementations, a selection of primitives for fitting segments as provided from a segmentation process (e.g., the process 400 of FIGS. 4A and 4B) can be made to construct a highly editable sketch. In some implementations, a single primitive or a combination of several primitives can be used for the construction of segment fit curves.

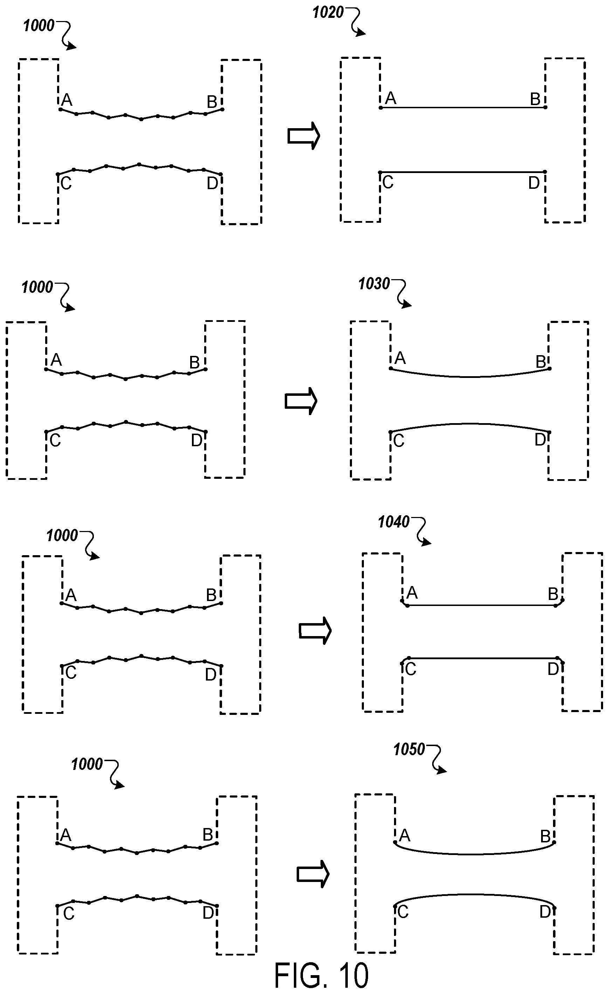

FIG. 10 shows examples for segment fitting with primitives including lines, arcs, combination of lines and arcs, and splines in accordance with the present disclosure.

At 1000, an example of a line segment primitive is shown. At 1000, the preserve curves are shown in dashed lines and the input polylines are shown in solid lines. At 1020, the segment fit curves are constructed for the input polyline and are shown in solid lines as well. The segment fits are constructed between points A, B and C, D. The tangents at these points are along the vertical direction. As shown at 1020, the primitives used for the fitting are lines. The use of a line for this fitting is an example, where the fitting can be performed with other primitives, as shown at 1030, where the fitting relies on arc primitives.

At 1040, the fitting is performed with two arcs and a line primitive for each of the points A, B and C, D. The primitive includes a line segment which has an arc on either side. The arcs are always tangential to the connecting line. In this example, the arcs are constructed such that they have a tangential continuity at the preserve curve ends as shown at 1040. Therefore, this primitive of two arcs and a line ensures tangent continuity while line segment primitive and arc primitive do not necessarily provide tangent continuity.

At 1050, a primitive that is modeled using a Bezier curve is used. The fitting is performed with a spline that provides tangential continuity with the connecting preserve curves as shown in 1050.

**Construction of segment fit curves**

In some implementations, during segment curve fitting, a line segment primitive can be constructed by joining the ends of preserve curves.

*Construction of arc primitive*

There can be a lot of possibilities to construct an arc that connects the preserve curves and approximates the polyline connecting them. When an arc is to be used to fit a sequence of segments, the following algorithm presented in Table 1 can be used to construct the arc.

Table 1

| Algorithm to construct an arc: |
| --- |
| 1. The given polyline is made denser by adding an additional mid-point between all consecutive points |
| 2. For each point in the polyline |
|     a. A circle is constructed which passes through this point and the end points of the preserve curves. |

(continued)

| Algorithm to construct an arc: |
|---|
| b. Error norm is constructed as $error_i = \sum_{k=1}^{N} \|(c - p_k) - r\|^2$, where r and c are the radius and center of the circle respectively. |
| 3. The point that corresponds to the smallest error computed is chosen as the best circle. The required arc is the portion of the circle that joins the two end points of the preserve curve. |

*Construction of two arcs and a line primitive*

In some implementations primitives can be constructed based on input information. When constructing such a primitive (for example, a two arc and a line primitive), the primitive has a total of fourteen degrees of freedom. Since a line has four degrees of freedom, and an arc has five degrees of freedom, there are ten degrees of freedom for two arcs, as shown at 1040 of FIG. 10. In some instances, there can be some constraints that reduce the degrees of freedom to two. Such constraints can include:

 1. Each arc passes through the preserve curve ends - four constraints.
 2. Each arc has tangent continuity at the preserve curve ends - two constraints.
 3. Each arc ends at the line segment end point - four constraints.
 4. Each arc has tangent continuity at the line segment end point - two constraints.

In some implementations, a primitive having two degrees of freedom can be constructed according to the algorithm presented at Table 2.

Table 2

| Algorithm to construct a primitive with two degrees of freedom: 1. The problem is decomposed into construction of two circles and a tangent passing through them. |
|---|
| 2. The portion of the circle which joins the preserve curve and is tangent to the line segment is extracted as the arc. |
| 3. Since this problem has two degrees of freedom, the radii of each circle are chosen to be the degrees of freedom that will be leveraged in the construction of this primitive. |
| 4. The radius for both the circles is determined as follows: |
| a. Each circle has the same radius. |
| b. Reference size for this fit is computed as the diagonal of the bounding box that encompasses all the points of the polyline. |
| c. This reference size is scaled by a factor scaleFactor and the radius is set to it. In this work, a scaleFactor of 30 is used. |
| 5. A circle is constructed at each end of the preserve curve. As explained above, this circle will pass through the preserve curve end and is tangent to the preserve curve at the point. The only degree of freedom for this circle is the radius. Since, there are two circles, there are two degrees of freedom. |
| 6. Two circles will have at most four tangents passing through them. All the tangents are computed based on the formulation shown in "Circle-circle tangents." Wolfram Mathworld. https://mathworld.wolfram.com/Circle-CircleTangents.html. |
| 7. For each tangent, an error is computed using the formula $error_i = \sum_{k=1}^{N} \|(c - p_k) - r\|^2$ over all the points in the input polyline. The tangent with the smallest error is chosen as the best tangent. |
| 8. The two circles along with the tangent are used to extract the arcs and line segment for this primitive. |

*Construction of spline primitive*

In the case where a spline is used as a primitive, a cubic Bezier curve can be represented by four control points. In this example, a control polygon is formed by joining the control points of the curve in sequence along with the last point joining the first point. The Bezier curve is always guaranteed to be tangent to the lines joining the first and second control points and to the line joining the third and last control point. This property is used to ensure that the Bezier curve primitive has tangential continuity with the preserve curves. The construction of this primitive is described below in Table 3. A cubic Bezier curve in two dimensions has eight degrees of freedom as it requires four control points that can be independently specified. The curve passes through the end points of the preserve curves, this reduces the degrees of freedom to four. The curve is tangent continuous at the preserve curve ends, so the degrees of freedom reduce to two.

Table 3

| Construction of a Bezier curve |
| --- |
| 1. The first point and the last point of the polyline are set as the first and last control points respectively. |
| 2. The second control point lies along the line which is parallel to the tangent of the preserve curve at the first point. |
| 3. The third control point lies along the line which is parallel to the tangent of the preserve curve at the last point. |
| 4. An approximate Bezier curve is constructed as follows: |
|     a. Three points are chosen from the input polyline which are approximately one-quarter, half, and three-quarters from the starting point of the polyline. |
|     b. For each of these points, a Bezier curve is constructed such that it passes through this point. An error is computed using the formula $error_i = \sum_{k=1}^{N} distance(p_k)^2$. Here distance is the minimum distance of the given point from the Bezier curve. |
|     c. Of all the three curves computed above, the curve with smallest error is returned as the approximate Bezier curve. |
| 5. A two-dimensional search space is created by varying the second and third control points of the approximate Bezier curve parametrically. |
| 6. Several curves in this search space are computed and their error with respect to the polyline is computed as described above in connection with augmentation 420. |
| 7. The curve with smallest error is determined to be the best curve and is returned by this algorithm. |

*Best fit Primitive*

The above approaches provide a way to construct primitives based on input information, provided from the segmentation as described in this disclosure. In some implementations, the fitting includes performing a selection of primitives to be used for the fitting that are provided according to a selection criterion. A polyline is provided with available tangent information at the ends. It is possible that no tangent information is available at either end of the polyline. In some implementations, multiple primitive options for the fitting can be constructed, and for each primitive, a quality measure can be computed. For example, the quality measure can be computed based on a quality function as described in Table 4. From the constructed primitives and the computed quality measure for each primitive, a selection can be made that meets a quality criterion as a selection criterion. After a candidate primitive is constructed, its quality measure is computed by evaluating the properties listed in Table 4. For example, the properties can be evaluated as a whole based on addition, where in some cases, the addition can also include weight factor considerations to provide a weight sum to compute the quality measure and to use it for a comparison between the different options.

Table 4

| Primitive Quality |
| --- |
| A quality function is defined including the following properties: |
| 1. Curve fit quality: An error (deviation from the input polyline) is computed using the formula $$error = \sum_{k=1}^{N} distance(p_k)^2$$, where distance is the minimum distance of a given point on the polyline to the primitive. |
| 2. Inherent penalty: A curve has an inherent penalty depending on the user's ease of use. For example, spline primitives may have a larger penalty as they are expected to be less preferred by the designers using Automated Modeling. |

(continued)

| Primitive Quality |
|---|
| A quality function is defined including the following properties: |
| 3. Obstacle Intersection penalty: A large penalty is added for a primitive that intersects with obstacles. |
| 4. Self-intersection penalty: A large penalty is added for a primitive that has self-intersections. Note that only spline primitives can have a self-intersection and other primitives do not self-intersect by construction. |

*Adaptive segment fit algorithm*

The above approaches provide example ways to construct primitives based on segment specification information. In some implementations, a requirement for providing a final sketch as output from the conversion of the input information can be that the sketch shown not intersect with obstacles. This non-intersection with obstacles requirement may not be guaranteed by the primitives alone. To address such a requirement and provide a sketch that does not include intersections with obstacles, the algorithm in Table 5 can be used.

Table 5

| 1. Given a polyline along with available tangent information at the ends. It is possible that no tangent information is available at either end of the polyline. |
|---|
| 2. Construct the best primitive as described in previous sections. |
| 3. If the best curve has no intersections with the obstacles, then this curve is returned. |
| 4. Otherwise, the input polyline is split into two parts by roughly subdividing at the mid-point. |
| 5. This results in two polylines: |
| a. First one from the start of the polyline to its mid. It is termed as the leftHalf. |
| b. Second one from the mid of the polyline to its end. It is termed as rightHalf. |
| 6. The tangent properties when available are transferred to these half-polylines. |
| 7. Steps 1-5 are recursively run on the leftHalf. |
| 8. Steps 1-5 are recursively run on the rightHalf. |
| 9. Both leftHalf and rightHalf curves are combined and returned. |
| 10. Notice that this algorithm can lead to multiple primitives that are linked to one another. |

In some implementations, an adaptive fit algorithm can be implemented where a composite curve with one or more primitives is provided to form a sketch, where the primitives satisfy a user requirement of obstacle avoidance, while also generating a sketch that is highly editable.

*Avoidance of self intersections*

The previously described approaches can provide a highly editable sketch, and as shown at Table 5, an algorithm can be used to avoid intersection of obstacles. However, it may be possible that the curves may intersect with other portions of the sketch. In some implementations, to overcome such potential issues, another algorithm can be used. The algorithm can be for example as presented at Table 6.

Table 6

| 1. Given | |
|---|---|
| | a. Level-set of the geometry that needs to be approximated with curves. |
| | b. Preserve curves and polylines of the above geometry. |

(continued)

| |
|---|
| 2. A line skeleton of the level-set is computed. |
| 3. This line skeleton is inflated by a measure that depends on the overall geometry dimensions. |
| 4. The inflated line skeleton is treated as an additional obstacle that is created internally. |
| 5. The adaptive segment fit algorithm is used to compute the curves. Since the resulting curves do not intersect the inflated line skeleton, the curves will not intersect any other curves in the final sketch. |

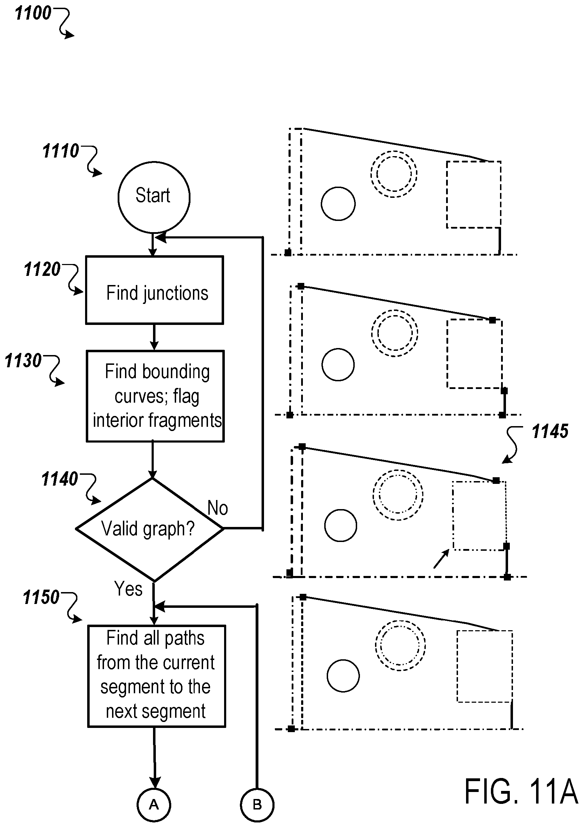

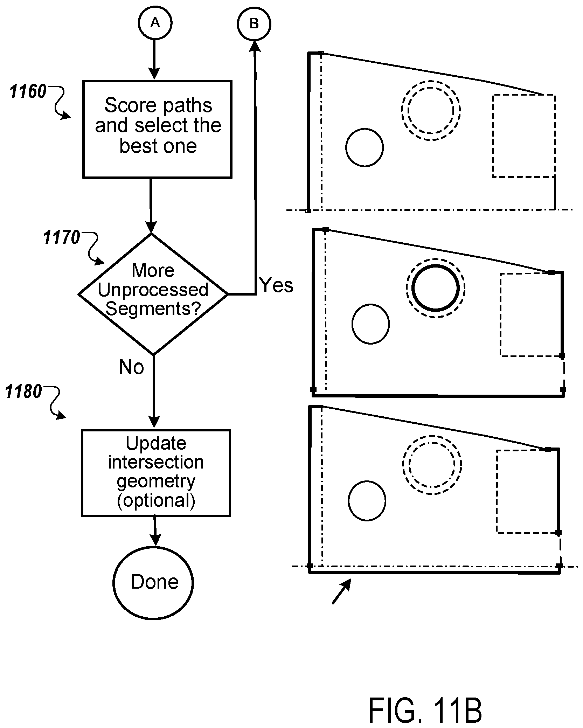

FIGS. 11A and 11B are flow diagrams presenting an example trimming process 1100 in accordance with implementations of the present disclosure. The trimming process 1100 can be performed after a segmentation process, e.g., as described in relation to FIGS. 4A and 4B, and before fitting is performed, e.g., as described in relation to FIGS. 9 and 10. In some implementations, the trimming process can include executing an algorithm to split each bounding curve into pieces (fragments) using the locations of segment endpoints, and select a subset of them to form the fixed portion of the final sketch. The trimming can be performed by successively connecting the end of one segment from the set of segment specifications provided from the segmentation process with the start of the next segment from the segmentation process and selecting the intervening fragment(s) for inclusion in a final sketch.

A flow chart for the Trimming algorithm is shown in FIGS. 11A and 11B.

At 1110, the process starts and input for the trimming is received. The same bounding curves used in the segmentation process 400 of FIGS. 4A and 4B (i.e., lines and arcs representing the preserves and intersection regions) are used in the present example trimming process 1100. The input for the trimming process 1100 includes segments identified in the segmentation specification. Further, the input can include a list of unused isoline loops from segmentation, and a layer level set originally provided as input, in the case that the segmentation relies on level set representation as input.

At 1120, junctions are identified at the start and end point of each segment of the set of segments from the segmentation.

## Find junctions

Junctions are extracted from the list of segments as the start and end point of each segment (placeholder segments are collapsed to a single point so they generate only one junction). Nearly overlapping junctions can be merged so long as the two junctions do not share a common segment and the endpoints of segments can be updated to exactly match the final junction points (in case any were moved slightly when merging occurred). Junctions form the nodes of a graph that is used throughout the trimming process. Graph edges initially include only segments (but are later expanded to include fragments of bounding curves; together these are called patches). The graph structure is doubly linked, i.e., every junction knows the patches that contact it, and each patch knows the junctions it contacts at its ends.

At 1130, the junctions are used to split the bounding curves into fragments. Some fragments that cross through regions far on the interior of the level set can be tagged as "interior" (see arrow at 1145). A graph with junctions as nodes and segments and fragments of preserve and intersection geometry as edges (collectively the edges are called patches) can be built. At 1140 it is determined whether the graph is valid. If the graph is not valid (i.e., there are nodes with less than two associated patches), the process restarts from the beginning with a coarser tolerance for attaching segment endpoints to junctions (see the arrow going from 1140 to 1120). In some implementations, an iterative processing of the segments can be performed. For each segment, a search for all possible paths between the end point of the current segment and the start point of the next segment is made, traversing a graph with fragments and segments as edges and junctions as nodes (at 1150). At 1160 of FIG. 11B, each path is scored using a heuristic that seeks to prioritize a simple, exterior set of trimmed bounding curve geometry, and the highest scoring path is selected for inclusion in the final sketch (see (e)). At drawing (f) of FIG. 11B, all selected (trimmed) bounding curves are shown. After all segments are processed (at 1170), the geometry can be optionally modified, at 1180, in some intersection regions to produce a more reasonable joint (see (g)).

The output of Trimming is a set of trimmed boundary curves which, when combined with the segments, form a closed sketch without self-intersections or dangling edges. Other approaches to the Trimming problem can be explored, including using a 2D CAD kernel that can find regions inside the untrimmed sketch and extract only boundary curves which are necessary to keep the shape intact. In some implementations, the trimming step happens after the segmentation is completed, but the trimming and fitting steps can be swapped without affecting the outcome.

**Fragment creation**

During the trimming process as discussed in relation to 1130, fragments are created by breaking bounding curves at the junction points. Bounding curves are organized into connected loops (except for bounding plate intersection regions, which are lines instead of loops). Each bounding curve is processed successively and is split by zero, one, or more junctions. Those junction points that are close to contacting the bounding curve are first identified, e.g., junctions than are within a coincident threshold (e.g., predefined or user-specified) distance from the bounding curve. If zero or one junction points are identified, no fragments are generated, and the bounding curve is considered an "untrimmed loop" and not added to the list of fragments or the graph. The junctions are then used to split the bounding curve into pieces and tiny curves present in the fragments are discarded where present. Fragment endpoints are then snapped to perfectly correspond to the nearest junction points, and the fragment is inserted into the graph.

Sometimes, untrimmed loops in preserves should be retained as isolated boundary loops (i.e., included in the final sketch in their entirety) and in other cases they should be discarded. All loops associated with a preserve can be processed and then the following logic to determine whether untrimmed loops should be retained as isolated boundary loops can be applied:

- Holes in trimmed preserves: If some loops associated with the preserve were trimmed/split, then any remaining untrimmed loops should be stored as isolated boundary loops (for example, holes in a preserve plate should be retained even if not contacted by any segments).
- Buried hole: If the preserve consists of two loops and both were untrimmed and the base loop is near the boundary of the level set and the other loop is on the interior of the level set, a buried hole caused by a preserve surface can be found. The base surface slice loop can be selected as an isolated boundary loop.
- Floating preserve: If the previous check does not pass and all the loops of the current preserve are untrimmed, each unused isoline left over from segmentation can be checked and if the distance between an untrimmed loop in the current preserve and an unused isoline is small (less than 1.5 voxels), add it as an isolated boundary loop. In this case an isolated preserve was present in the isoline, and its boundaries should be retained in the final sketch.

In some implementations, intersection regions need not be considered for isolated boundary loops. At this point the graph data structure is checked to ensure that every junction (node) has at least two associated patches (edges). If nodes are found with fewer patches the graph is ill-formed, a valid sketch may not be created. In order to improve the likelihood of an acceptable outcome, the process restarts at the Find Junctions step with a looser tolerance for coincident points.

After the graph is finalized, the maximum interior distance from the points on each patch (edge) in the graph from the level set boundary is computed. If the maximum interior distance is more than a threshold (3 voxels), it is marked as "interior". The maximum interior distance can also be cached for future use.

**Fragment selection (step 1140)**

In this step of the process, the segments are iteratively processed and one or more fragments which connect the current segment's end point with the next segment's start point are successively selected for inclusion in the final sketch. In each loop, a segment is selected, where the segment is not a collapsed segment, from which to start the search. All possible paths between the start and end points can be determined and then the paths can be scored to determine a path that meets a selection criterion.

**Finding paths (1150)**

At 1150 of FIG. 11A, a current segment end junction and the next segment start junction can be taken, and a path that connects them using a small number of curves which are estimated towards the outside of the shape (rather than the inside) are selected. That path is a path that does not reuse fragments which have already been selected by a previous path. To achieve this, a breadth first search is performed to find all paths in the graph that connect the two junctions without traversing over "used" edges. If no paths can be found, the search is reexecuted allowing traversal over used paths.

**Scoring paths (1160)**

A path is scored by traversing it from beginning to end and scoring each patch individually. The path's score is the sum of the scores of its constituent patches. A patch is scored with respect to its previous patch (which can be a boundary curve or a segment from the segmentation process) according to several heuristics described in Table 7 below. The goal is to select a path which is exterior to the sketch (i.e., one that will help produce a final sketch which is free of sub-loops), reflects the intent of the input level set or isoline, and does not interfere with paths for other pairs of segments in this design. Each component is weighted according to an experimentally tuned heuristic and summed together to form the patch score.

Table 7

| Name | Description |
|---|---|
| **Outside direction** | For most patches, the outside direction is known or estimated. If the previous patch and current patch share the same outside direction, a positive score is assigned; if they are opposite a negative score is assigned. This increases the likelihood that exterior edges of the shape are used. |
| **Next by angle** | Create an ordered list of the incidence angles of each patch entering the junction between the current and next patches. Using the outside direction of the previous patch to pick a direction around the junction, provide a positive score if the current patch is the next around the junction and a negative score otherwise. This increases the likelihood that it stays on the outside of the shape and does not include an interior edge. |
| **Simple patch** | A patch which consists of a single line is considered "simple" and receives a positive score. Non-simple patches receive no score. |
| **Distance from boundary** | Apply a penalty to patches proportional to the distance into the level set they penetrate. |
| **Other segments** | If the junctions on the endpoints of the current patch are shared by segments which are not associated with this search, penalize the patch. |
| **Patch type** | During Segmentation, the type of boundary curve at each end of each segment is determined and that information is stored in the segment specification. It can be checked if the patch adjacent to the start segment is the expected type (preserve or intersection) and penalize the patch if it is not. Likewise for the segment adjacent to the destination. |
| **Length** | Most of the time paths should be only one patch long. Each additional patch in a path can be penalized to avoid long (but otherwise high-scoring) paths. |

A second score is computed by traversing the path backwards, starting at the endpoint and moving back to the start (see the next section). The path's final score is the smaller of its forward and backwards scores. The path with the highest final score is selected for inclusion in the final sketch and its constituent patches are marked as used. The destination segment has now been connected to a chain of patches and becomes the new start segment for the next step of the Trimming process.

**Special treatment for Placeholder segments**

Much of the scoring logic described above requires each patch to have a previous patch with known attributes (outside direction, incidence direction to a junction, etc.) which are not available for placeholder segments, which have been collapsed to zero length. To address this during trimming, once a placeholder segment has been connected to a chain of patches, it is assigned a "proxy patch", which is the patch immediately behind the placeholder in the chain. Placeholders which have not yet been connected have no proxy. When pathfinding and scoring occurs starting from a placeholder segment, the placeholder always has a proxy. If pathfinding and scoring uses a placeholder segment as the destination, it likely does not have a proxy (in fact the presence of a proxy is an indicator that something has gone wrong), and in these cases no backwards scoring is performed.

FIG. 12A shows examples 1200, 1210 of simplified curves according to a process for simplification of a polyline curve into a set of simple primitives.

In some implementations, polyline curve fits can be used in the context of:

- preprocessing of the preserve slices, polyline fits with tight tolerances are used to approximate each section of the preserve slice with lines and arcs,
- fit Segment specification generated from a segmentation process (e.g., as described in relation to FIGS. 3, 4A and 4B) which correspond to loops (they have no neighbors), and/or
- as a fallback in the case where trimming and segmentation produced no segment specification and no trimmed bounding curves.

A polyline is a curve that is formed by joining a sequence of points with line segments. The polyline curves can be open or closed as shown below.

In some implementations, a simplified polyline can be constructed according to the below presented five parts.

**1. Elimination of collinear points and coincident points**

Consecutive coincident points in the given polyline are detected and eliminated. Two points are coincident if the distance between them is less than a threshold distance. Next, consecutive collinear points are identified and eliminated, for example, if there are three consecutive points that are on the same line, then the mid-point can be eliminated.

**2. Detection of a circle**

This part detects if the given polyline can be approximated as a full circle. If the given input polyline is a closed loop, then an approximate circle is constructed as described below and the circle definition is returned if a valid and accurate circle can be constructed. A circle definition consists of the center and its radius or three points on the circle.

In some implementations, a least square circle fit is obtained by minimizing the error norm of the given points with respect to the circle that would be constructed. To achieve efficient approximation of the set of points with a circle, the following two conditions can be enforced.

*Condition 1: Root mean square error.*

The root mean square error (rms error) for the circle with respect to the input points is computed and the circle is considered valid only when this error is below a threshold. The following equation shows the rms error where $p_k$ is the $k^{th}$ input point of the total N points, and c is the center of the circle and r is its radius.

$$rms\ error = \left(\frac{\sum_{k=0}^{N}(|p_k - c| - r)^2}{N}\right)^{\frac{1}{2}}$$

$$(1)$$

A non-dimensional threshold factor $\alpha$ is defined to control the effectiveness of the circle calculations. A circle is considered an accurate representation of the points when rms error < $\alpha r$. In this work, $\alpha$ is set to 0.02.

*Condition 2: Area error*

The area of polygon formed by the closed polyline is computed and compared with the area of the circle constructed using the above algorithm. The circle is considered valid only when the relative error of the closed polygon area is below a threshold with respect to the circle area. The same non-dimensional threshold factor $\alpha$ defined above is used here for the threshold. For a valid circle $\frac{|Circle\ Area - Polygon\ Area|}{Circle\ Area} < \alpha$ . *Circle Area*

**3. Detection of an arc**

This part detects if the given polyline can be approximated as an arc. If the given polyline is not a closed loop, then an approximate circle is constructed using the algorithm described above. One modification is made with respect condition 2. In this case, the area of the arc formed by joining the start and end points is used for checking the area error. The start and end points of the polyline via the center of the arc are also joined to form a closed polygon. If both the conditions as described above are satisfied, then an arc is extracted by using the start and end points of the input polyline along with the mid-point on this arc.

**4. Simplification with lines only**

This part detects if the given polyline can be approximated with line segments. A simplified polyline is returned. This approach can use Visvalingam-Whyatt algorithm for polyline simplification that can include the steps as shown in Table 8 with a reference to FIG. 12B.

Table 8

| 1. Given a polyline (open or closed) and an area threshold: |
| --- |
| 2. For each point, compute the area enclosed by the triangle formed by connecting this point and its adjacent points and assign the area to this point. In FIG. 12B, the triangle formed for point B is ABC. |
| 3. Find the point which has the smallest area. In FIG. 12B, the point E has the smallest area which corresponds to the triangle DEF. |
| 4. If the smallest area is less than the area threshold, delete this point. Otherwise, terminate the algorithm. In FIG. 12B, going from the top-left diagram 1230 to the right-side diagram 1240, point E is deleted. |
| 5. The bottom diagram 1250 on FIG. 12B represents an additional iteration of the Visvalingam-Whyatt algorithm for the polyline simplification. |
| 6. Repeat steps 1-4 until termination. |

In some implementations, to automate the process, an automatic computation of area threshold can be implemented and applied.

**Area Threshold**

A threshold is automatically computed based on the algorithm below for a given problem and is also explained in FIG. 12C.

The following steps can be performed:

1. Given a polyline (open or closed) and parameter (Sector Count) that specifies number of sectors a circle can be divided. In this work, Sector Count = 36 is used. In FIG. 12C, the given polyline is ABCDEFGH.

2. For each point, compute the area, perimeter and $\frac{area}{perimeter}$ ratio of the triangle formed by connecting this point and its adjacent points.

3. Identify the maximum area and maximum $\frac{area}{perimeter}$ ratio over all the points.

4. Compute the circumcircle of the bounding box of all the points in the polyline. The circumcircle is shown in dashed line in FIG. 12C.

5. The circumcircle is divided into Sector Count. Each sector contains an arc of the circumcircle. A triangle can be formed by joining the end points and the mid-point of this arc. In FIG. 12C, the triangle is represented by points PQR. The area/perimeter of such a triangle is computed. This quantity is used as a measure of the threshold. This threshold varies with each problem and thus specifies a generalized approach for computing the area threshold.

6. The quantity computed above is scaled by $max \frac{max\ area}{\frac{area}{perimeter}}$ as described in step 3. This quantity has units of area and is used as area threshold in Visvalingam-Whyatt algorithm.

The area threshold can be characterized by some properties such as:

• The area threshold has a unit of area.
• When a point is chosen for deletion, its area (area formed by this point and its neighbors) is compared with area threshold to determine if it needs to be deleted. Therefore, the unit of this threshold should be area.
• The simplification behavior of a set of points should remain unchanged when all points are scaled. Each point's area (area formed by this point and its neighbors) changes proportionally with the square of the scale. Since the area threshold also changes in proportion to the area (proportional to the square of the scale), the simplification behavior of a set of points remains invariant with the scaling.

In some implementations, the simplification algorithm can be implemented as a two-step process where the area threshold is automatically computed first and then Visvalingam-Whyatt algorithm is applied to achieve the required line simplification.

## 5. Simplification with lines and arcs

Each line segment is connected to an adjacent arc or another line-segment, similarly each arc is connected to an arc or a line segment. The following are the main steps in this algorithm.

1. The given polyline is simplified with lines only approach as described above.
2. Starting with the first point in the polyline, an arc with largest number of points is computed (details below). There are two possibilities here:

    a. An arc cannot be formed with sufficient quality. In this case, a line segment is formed and the search for the arc proceeds from the next point in the polyline.
    b. An arc is formed. In this case, the arc is returned and a new search for arc is started from the next point in the polyline.

3. The process ends when the last point in the polyline has been processed.

In the above algorithm, the construction of the longest arc from the points in the given polyline can be performed based on the below algorithm:

1. Given a polyline. This polyline may be a part of the original polyline, for example if k points are already processed in the original polyline, the polyline for this algorithm is the points k+1 to N, where N is the total number of points in the original polyline.
2. Take first three points in the polyline. These three points will always form an arc (denote it by retArc). Compute the radius and center of such an arc.
3. Add the next point to the above points and construct a new arc (denote it by newArc) that is formed by the new point and the previous two points.
4. Check if the newArc and retArc have centers and radii within a threshold. An absolute threshold can be used here.

    a. If the retArc and newArc are within a threshold, the new point is considered to be part of the retArc and the algorithm goes back to step 3.
    b. Otherwise, retArc is returned as the longest arc.

This approach leads to simplification of the given polyline into lines and arcs and when used in sketches, it enables easy editing.

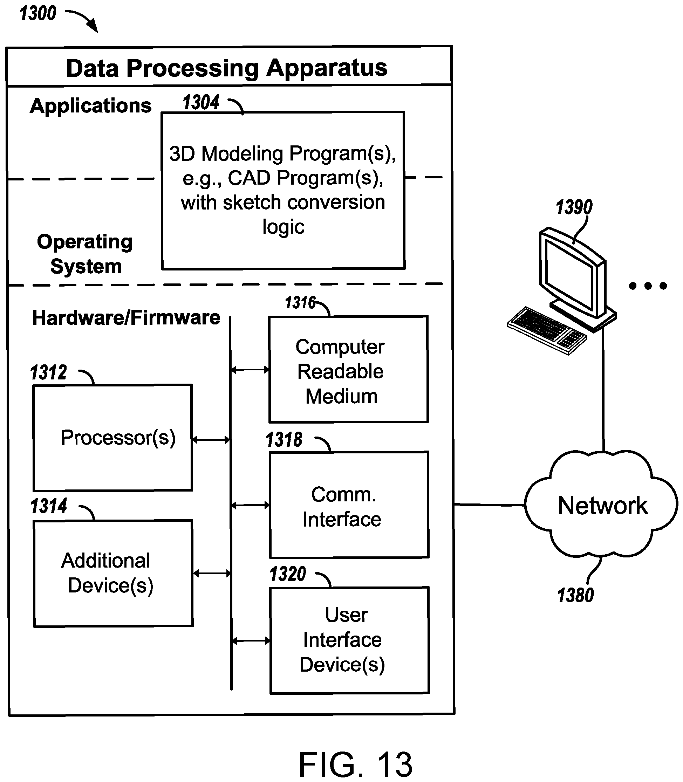

FIG. 13 is a schematic diagram of a data processing system including a data processing apparatus 1300, which can be programmed as a client or as a server. The data processing apparatus 1300 is connected with one or more computers 1390 through a network 1380. While only one computer is shown in FIG. 13 as the data processing apparatus 1300, multiple computers can be used. The data processing apparatus 1300 includes various software modules, which can be distributed between an applications layer and an operating system. These can include executable and/or interpretable software programs or libraries, including tools and services of one or more 3D modeling programs 1304 that implement sketch conversion logic, as described above. Thus, the 3D modeling program(s) 1304 can be CAD program(s) 604 (such as CAD program(s) 116) and can implement one or more level-set based methods for shape and/or topology optimization and physical simulation operations (finite element analysis (FEA) or other) that incorporate logic for converting a curve representation and input predefined geometries (e.g., including boundary geometries) into a primitive sketch geometry. Further, the program(s) 1304 can potentially implement manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 1300 also includes hardware or firmware devices including one or more processors 1312, one or more additional devices 1314, a computer readable medium 1316, a communication interface 1318, and one or more user interface devices 1320. Each processor 1312 is capable of processing instructions for execution within the data processing apparatus 1300. In some implementations, the processor 1312 is a single or multi-threaded processor. Each processor 1312 is capable of processing instructions stored on the computer readable medium 1316 or on a storage device such as one of the additional devices 1314. The data processing apparatus 1300 uses the communication interface 1318 to communicate with one or more computers 1390, for example, over the network 1380. Examples of user interface devices 1320 include a display, a camera, a speaker, a microphone, a tactile feedback device, a keyboard, a mouse, and VR and/or AR equipment. The data processing apparatus 1300 can store instructions that implement operations associated with the program(s) described above, for example, on the computer readable medium 1316 or one or more additional devices 1314, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

Examples

Although the present application is defined in the attached claims, it should be understood that the present invention can also (additionally or alternatively) be defined in accordance with the following examples:

Example 1: A computer-implemented method comprising:

obtaining (i) a two-dimensional (2D) curve and (ii) predefined geometries;
converting the 2D curve and the predefined geometries into a primitive sketch geometry by approximating free regions as segmented from the 2D curve to a set of 2D primitives so as to minimize a number of 2D primitives used in the primitive sketch geometry, wherein converting the 2D curve comprises

processing a plurality of candidate segments determined based on segmenting the free regions according to identified points on the 2D curve that meet a threshold for curve contact with a geometry of the predefined geometries to determine a set of segments for the free regions, and
fitting the set of segments to the set of 2D primitives; and

providing the primitive sketch geometry for rendering, editing, and/or simulating at a computer-aided design program based on user input to construct a 3D model of an object for use in manufacturing a physical structure of the object using one or more computer-controlled manufacturing systems.

Example 2. The method of Example 1, wherein the obtained predefined geometries comprise boundary geometries comprising a set of input preserve geometries, and wherein obtaining the 2D curve and the predefined geometries comprises obtaining a representation including a set of connected points that describe the 2D curve.

Example 3. The method of any one of the preceding examples, wherein converting the 2D curve and the predefined geometries comprises assembling the fitted set of segments and at least a portion of the predefined geometries to obtain the primitive sketch geometry.

Example 4. The method of Example 2, wherein the converting of the 2D curve and the predefined geometries comprises:

segmenting the representation into fixed regions and free regions, wherein the fixed regions are defined for the boundary geometries, and wherein the free regions are evaluated to determine the set of segments to be fitted to the set of 2D primitives; and

obtaining 2D primitives for fitting the fixed regions with,

wherein the fitting of the set of segments determined based on segmenting comprises

selecting a 2D primitive of a primitive type to approximate a sequence of segments of a representation of the 2D curve by minimizing an error measure associated with the selected 2D primitive.

Example 5. The method of Example 2, wherein the conversion of the 2D curve and the predefined geometries comprises:

analyzing the set of connected points by selecting first regions as fixed regions and second regions identified as free regions, wherein the fixed regions are to be replaced with an exact portion of a respective boundary geometry of the obtained predefined geometries, and wherein the free regions are to be approximated with the set of 2D primitives comprising at least one of lines, arcs, and circles;

processing the free regions to determine the plurality of candidate segments based on segmentation and evaluation of relative proximities between determined segments and the boundary geometries according to an inclusion criterion;

determining the set of segments based on the plurality of candidate segments, wherein the determining comprises iteratively evaluating the plurality of candidate segments to perform at least one of:

identifying one or more segments to be removed from the plurality of candidate segments, identifying an additional segment to be added to the plurality of candidate segments, and/or identifying at least one segment to be collapsed to a single point; and

generating segment specifications for the determined set of segments.

Example 6. The method of Example 5,

wherein the processing of the free regions comprises:

tagging each point of the 2D curve based on proximity of the respective point to a boundary geometry of the boundary geometries, wherein the proximity is determined according to a first threshold contact distance, wherein a point of the representation is tagged as touching when a distance between the point and a boundary geometry is below the threshold contact distance;

iteratively evaluating points on the 2D curve based on the tagging of the points to determine the plurality of candidate segments of the 2D curve; and

processing the determined plurality of candidate segments based on iterating over the points to iteratively extract segments of the determined plurality of candidate segments that meet an inclusion criterion, wherein the inclusion criterion specifies that a candidate segment is to be selected for inclusion in the set of segments when either the candidate segment connects two different boundary geometries or includes a point that is tagged as not being in contact with a boundary geometry, as having a distance to a boundary geometry above a second threshold contact distance ; and

wherein the generation of the segment specifications comprises:

generating metadata for the extracted set of segments to generate a list of segment specifications for the set of segments, wherein the generation of the metadata comprises:

upon determining that a candidate segment meets the inclusion criterion, initializing an entry into the list of segment specifications to include the generated metadata for the respective segment.

Example 7. The method of Example 6, wherein the iterative evaluation of the points on the 2D curve comprises:

determining a first candidate segment comprising:

determining a start point for a segment that is a point tagged as touching a boundary geometry, wherein a next point on the representation is either not touching a boundary geometry or touching a different boundary geometry, and

determining an end point for the segment as a successively iterated point from the set of connected points that is touching a boundary geometry, wherein the segment between the start point and the end point is determined as the first candidate segment, and wherein a subsequent start point is determined based on iterating on points subsequent to the end point as determined for the first candidate segment;

determining whether there is at least one isolated loop that meets an inclusion loop criterion, wherein the inclusion loop criterion defines a threshold distance from the boundary geometries above which each isolated loop is to be considered for inclusion in the plurality of candidate segments;
in response to determining that there is an isolated loop that meets the inclusion loop criterion, adding the isolated loop that meets the inclusion loop criterion in the plurality of candidate segments in response to determining that the isolated loop that meets the inclusion loop criterion, encloses an area above a threshold area size to be added as a candidate segment; and
iteratively determining the plurality of candidate segments in response to the iterative evaluation.

Example 8. The method of Example 6, wherein the tagging of each point of the set of connected points comprises: classifying regions of the boundary geometries as contactable and non-contactable based on inference from a structure of the fixed region to exclude a region of the boundary geometry from contacting a segment of the plurality of candidate segments.

Example 9. The method of Example 6, wherein the processing of the determined plurality of candidate segments comprises:
modifying at least one segment of the plurality of candidate segments to ensure connection of the at least one segment to the boundary geometry, wherein the modifying comprises

for each entry in the list of the segment specification, determining whether a point that is tagged as touching to the boundary geometry is connecting the boundary geometry; and
when determining that an entry from the list includes a point that is tagged as touching the boundary geometry does not connect with the boundary geometry, modifying the entry to include a point that actually is in contact with the boundary geometry.

Example 10. The method of Example 5, wherein the boundary geometries comprise intersecting geometries, wherein the processing of the determined plurality of candidate segments comprises:

identifying segments from the plurality of candidate segments that are below a threshold length; and
for each of the identified segments,

determining whether there is an intersecting geometry that is in contact with points between end points of the respective segment, and
in response to determining that the intersecting geometry is in contact with a point that is within a threshold distance from a midpoint of the respective segment, collapsing the respective segment on the point of contact.

Example 11. The method of Example 6, wherein the boundary geometries comprise intersecting geometries, wherein processing the determined plurality of candidate segments comprises:
for each candidate segment of the list of segment specifications,

evaluating a next-in-sequence segment of the list of segment specifications for a subsequent candidate segment, and
removing the respective candidate segment and the next-in-sequence segment in response to determining that

(i) the respective candidate segment begins on a same boundary geometry where the next-in-sequence segment ends,
(ii) a relative distance between points on the respective candidate segments and points on a fixed region of the boundary geometry are within a threshold distance of closeness to collapse the respective candidate segment, and
(iii) a distance between a set of points sampled from the boundary geometry that are between contacting endpoints of the respective candidate segment and the next-in-sequence segment is within a threshold distance to a predefined point.

Example 12. The method of Example 5, wherein the set of connected points are sampled on a zero contour of a level-set representation of a 2D profile of a plate that is generated based on an automated modeling-plates solver to perform a shape synthesis process of a 3D geometry of a part according to boundary conditions, and wherein the method comprises:

providing segment specifications, wherein each segment specification comprises information associated with points on an isoline extracted from the level-set representation that were used to determine a respective segment, information about start and end neighbor points on boundary geometries in contact with each end of the segment, outside direction predictions defining a side of the isoline that is outside of a shape defined according to the level-set representation, identification of a next segment found in a same isoline loop, and the identity of a source isoline loop to determine the respective segment.

Example 13. The method of Example 6, wherein the fitting of the set of segments is performed based on the list of segment specifications, and wherein the fitting comprises:

determining a set of options to fit a set of the segments of the list to one or more 2D primitives;
determining a set of score measures corresponding to the set of options based on preset criteria including a fitting error for deviation from the obtained 2D curve, a usability ranking based on types of 2D primitives used to fit a respective set of segments, obstacle proximity, and self-intersection properties; and
selecting an option from the set of options based on the determined set of score measures.

Example 14. The method of Example 13, wherein the fitting of the set of segments comprises:

iteratively determining whether to approximate a set of successive segments identified in the list of segment specifications with a primitive of a type selected from a group consisting of a line, an arc, and a circle based on evaluations with respect to a predefined maximum error threshold measure corresponding to a type of the group of primitive types; and
in response to determining that approximating the set of successive segments with each of the primitive types of the group is associated with an error above the predefined maximum error threshold measure for approximation, approximating the set of successive segments to a four-control-point B-spline.

Example 15. The method of any one of the preceding claims, wherein the predefined geometries comprise boundary geometries, and wherein the conversion of the 2D curve and the predefined geometries comprises:
fitting the boundary geometries comprising intersecting geometries and preserve geometries to one or more 2D primitives, wherein the fitting comprises:

approximating the intersecting geometries by explicit approximation with a line or a box, and
approximating the preserve geometries by arbitrary fitting to a primitive of the group consisting of a line, an arc, and a circle.

Similar operations and processes as described in Examples 1 to 15 can be performed in a system comprising at least one process and a memory communicatively coupled to the at least one processor where the memory stores instructions that when executed cause the at least one processor to perform the operations. Further, a non-transitory computer-readable medium storing instructions which, when executed, cause at least one processor to perform the operations as describes in any one of the Examples 1 to 15 can also be implemented.

EMBODIMENTS

Although the present invention is defined in the claims, it should be understood that the present invention can also (alternatively) be defined in accordance with the following embodiments:

1. A computer-implemented method comprising:

obtaining (i) a two-dimensional (2D) curve and (ii) predefined geometries;
converting the 2D curve and the predefined geometries into a primitive sketch geometry by approximating free regions as segmented from the 2D curve to a set of 2D primitives so as to minimize a number of 2D primitives used in the primitive sketch geometry, wherein converting the 2D curve comprises

processing a plurality of candidate segments determined based on segmenting the free regions according to identified points on the 2D curve that meet a threshold for curve contact with a geometry of the predefined geometries to determine a set of segments for the free regions, and
fitting the set of segments to the set of 2D primitives; and

providing the primitive sketch geometry for rendering, editing, and/or simulating at a computer-aided design program based on user input to construct a 3D model of an object for use in manufacturing a physical structure of the object using one or more computer-controlled manufacturing systems.

2. The method of embodiment 1, wherein the obtained predefined geometries comprise boundary geometries comprising a set of input preserve geometries, and wherein obtaining the 2D curve and the predefined geometries comprises obtaining a representation including a set of connected points that describe the 2D curve.

3. The method of embodiment 1, wherein converting the 2D curve and the predefined geometries comprises assembling the fitted set of segments and at least a portion of the predefined geometries to obtain the primitive sketch geometry.

4. The method of embodiment 2, wherein the converting of the 2D curve and the predefined geometries comprises: segmenting the representation into fixed regions and the free regions, wherein the fixed regions are defined for the boundary geometries, and wherein the free regions are evaluated to determine the set of segments to be fitted to the set of 2D primitives; and

obtaining 2D primitives for fitting the fixed regions with,
wherein the fitting of the set of segments determined based on segmenting comprises
selecting a 2D primitive of a primitive type to approximate a sequence of segments of a representation of the 2D curve by minimizing an error measure associated with the selected 2D primitive.

5. The method of embodiment 2, wherein the conversion of the 2D curve and the predefined geometries comprises:

analyzing the set of connected points by selecting first regions as fixed regions and second regions identified as free regions, wherein the fixed regions are to be replaced with an exact portion of a respective boundary geometry of the obtained predefined geometries, and wherein the free regions are to be approximated with the set of 2D primitives comprising at least one of lines, arcs, and circles;
processing the free regions to determine the plurality of candidate segments based on segmentation and evaluation of relative proximities between determined segments and the boundary geometries according to an inclusion criterion;
determining the set of segments based on the plurality of candidate segments, wherein the determining comprises iteratively evaluating the plurality of candidate segments to perform at least one of:

identifying one or more segments to be removed from the plurality of candidate segments,
identifying an additional segment to be added to the plurality of candidate segments, and/or
identifying at least one segment to be collapsed to a single point; and

generating segment specifications for the determined set of segments.

6. The method of embodiment 5,

wherein the processing of the free regions comprises:

tagging each point of the 2D curve based on proximity of the respective point to a boundary geometry of the boundary geometries, wherein the proximity is determined according to a first threshold contact distance, wherein a point of the representation is tagged as touching when a distance between the point and a boundary geometry is below the threshold contact distance;
iteratively evaluating points on the 2D curve based on the tagging of the points to determine the plurality of candidate segments of the 2D curve; and
processing the determined plurality of candidate segments based on iterating over the points to iteratively extract segments of the determined plurality of candidate segments that meet an inclusion criterion, wherein the inclusion criterion specifies that a candidate segment is to be selected for inclusion in the set of segments when either the candidate segment connects two different boundary geometries or includes a point that is tagged as not being in contact with a boundary geometry, as having a distance to a boundary geometry above a second threshold contact distance ; and

wherein the generation of the segment specifications comprises:
generating metadata for the extracted set of segments to generate a list of segment specifications for the set of segments, wherein the generation of the metadata comprises:
upon determining that a candidate segment meets the inclusion criterion, initializing an entry into the list of segment specifications to include the generated metadata for the respective segment.

7. The method of embodiment 6, wherein the iterative evaluation of the points on the 2D curve comprises:

determining a first candidate segment comprising:

determining a start point for a segment that is a point tagged as touching a boundary geometry, wherein a next point on the representation is either not touching a boundary geometry or touching a different boundary geometry, and
determining an end point for the segment as a successively iterated point from the set of connected points that is touching a boundary geometry, wherein the segment between the start point and the end point is determined as the first candidate segment, and wherein a subsequent start point is determined based on iterating on points subsequent to the end point as determined for the first candidate segment;

determining whether there is at least one isolated loop that meets an inclusion loop criterion, wherein the inclusion loop criterion defines a threshold distance from the boundary geometries above which each isolated loop is to be considered for inclusion in the plurality of candidate segments;
in response to determining that there is an isolated loop that meets the inclusion loop criterion, adding the isolated loop that meets the inclusion loop criterion in the plurality of candidate segments in response to determining that the isolated loop that meets the inclusion loop criterion, encloses an area above a threshold area size to be added as a candidate segment; and
iteratively determining the plurality of candidate segments in response to the iterative evaluation.

8. The method of embodiment 6, wherein the tagging of each point of the set of connected points comprises:
classifying regions of the boundary geometries as contactable and non-contactable based on inference from a structure of the fixed region to exclude a region of the boundary geometry from contacting a segment of the plurality of candidate segments.

9. The method of embodiment 6, wherein the processing of the determined plurality of candidate segments comprises:
modifying at least one segment of the plurality of candidate segments to ensure connection of the at least one segment to the boundary geometry, wherein the modifying comprises

for each entry in the list of the segment specification, determining whether a point that is tagged as touching to the boundary geometry is connecting the boundary geometry; and
when determining that an entry from the list includes a point that is tagged as touching the boundary geometry does not connect with the boundary geometry, modifying the entry to include a point that actually is in contact with the boundary geometry.

10. The method of embodiment 5, wherein the boundary geometries comprise intersecting geometries, wherein the processing of the determined plurality of candidate segments comprises:

identifying segments from the plurality of candidate segments that are below a threshold length; and
for each of the identified segments,

determining whether there is an intersection between boundary curves attached to each end of the respective identified segment that is at a point that is within a threshold distance from a midpoint of the respective identified segment, and
in response to determining that the intersection is at the point that is within the threshold distance from the midpoint of the respective identified segment, collapsing the respective identified segment on the point.

11. The method of embodiment 6, wherein the boundary geometries comprise intersecting geometries, wherein processing the determined plurality of candidate segments comprises:

for each candidate segment of the list of segment specifications,

evaluating a next-in-sequence segment of the list of segment specifications for a subsequent candidate segment, and

removing the respective candidate segment and the next-in-sequence segment in response to determining that

(i) the respective candidate segment begins on a same boundary geometry where the next-in-sequence segment ends,

(ii) distances between points on 1) the respective candidate segments and isoline regions between candidate segments and points 2) on the boundary geometry are within a threshold distance of closeness to collapse the respective candidate segment, and

(iii) a distance between a set of points sampled from the boundary geometry that are between contacting endpoints of the respective candidate segment and the next-in-sequence segment is within a threshold distance to a predefined point.

12. The method of embodiment 5, wherein the set of connected points are sampled on a zero contour of a level-set representation of a 2D profile of a plate that is generated based on an automated modeling-plates solver to perform a shape synthesis process of a 3D geometry of a part according to boundary conditions, and wherein the method comprises:

providing segment specifications, wherein each segment specification comprises information associated with points on an isoline extracted from the level-set representation that were used to determine a respective segment, information about start and end neighbor points on boundary geometries in contact with each end of the segment, outside direction predictions defining a side of the isoline that is outside of a shape defined according to the level-set representation, identification of a next segment found in a same isoline loop, and an identity of a source isoline loop to determine the respective segment.

13. The method of embodiment 6, wherein the fitting of the set of segments is performed based on the list of segment specifications, and wherein the fitting comprises:

determining a set of options to fit a set of the segments of the list to one or more 2D primitives;
determining a set of score measures corresponding to the set of options based on preset criteria including a fitting error for deviation from the obtained 2D curve, a usability ranking based on types of 2D primitives used to fit a respective set of segments, obstacle proximity, and self-intersection properties; and
selecting an option from the set of options based on the determined set of score measures.

14. The method of embodiment 13, wherein the fitting of the set of segments comprises:

iteratively determining whether to approximate a set of successive segments identified in the list of segment specifications with a primitive of a type selected from a group consisting of a line, an arc, and a circle based on evaluations with respect to a predefined maximum error threshold measure corresponding to a type of the group of primitive types; and
in response to determining that approximating the set of successive segments with each of the primitive types of the group is associated with an error above the predefined maximum error threshold measure for approximation, approximating the set of successive segments to a four-control-point B-spline.

15. The method of embodiment 1, wherein the predefined geometries comprise boundary geometries, and wherein the conversion of the 2D curve and the predefined geometries comprises:
fitting the boundary geometries comprising intersecting geometries and preserve geometries to one or more 2D primitives, wherein the fitting comprises:

approximating the intersecting geometries by explicit approximation with a line or a box, and
approximating the preserve geometries by arbitrary fitting to a primitive of the group consisting of a line, an arc, and a circle.

16. A system comprising:

a non-transitory storage medium having instructions of a computer aided design program stored thereon; and
one or more data processing apparatus configured to run the instructions of the computer aided design program to perform operations comprising:
obtaining (i) a two-dimensional (2D) curve and (ii) predefined geometries;

converting the 2D curve and the predefined geometries into a primitive sketch geometry by approximating free regions as segmented from the 2D curve to a set of 2D primitives so as to minimize a number of 2D primitives used in the primitive sketch geometry, wherein converting the 2D curve comprises processing a plurality of candidate segments determined based on segmenting the free regions according to identified points on the 2D curve that meet a threshold for curve contact with a geometry of the predefined geometries to determine a set of segments for the free regions, and fitting the set of segments to the set of 2D primitives; and

providing the primitive sketch geometry for rendering, editing, and/or simulating at a computer-aided design program based on user input to construct a 3D model of an object for use in manufacturing a physical structure of the object using one or more computer-controlled manufacturing systems.

17. The system of embodiment 16, wherein the obtained predefined geometries comprise boundary geometries comprising a set of input preserve geometries, and wherein obtaining the 2D curve and the predefined geometries comprises obtaining a representation including a set of connected points that describe the 2D curve.

18. The system of embodiment 17, wherein converting the 2D curve and the predefined geometries comprises assembling the fitted set of segments and at least a portion of the predefined geometries to obtain the primitive sketch geometry, wherein the converting of the 2D curve and the predefined geometries comprises:

segmenting the representation into fixed regions and the free regions, wherein the fixed regions are defined for the boundary geometries, and wherein the free regions are evaluated to determine the set of segments to be fitted to the set of 2D primitives; and
obtaining 2D primitives for fitting the fixed regions with,
wherein the fitting of the set of segments determined based on segmenting comprises
selecting a 2D primitive of a primitive type to approximate a sequence of segments of a representation of the 2D curve by minimizing an error measure associated with the selected 2D primitive.

19. A non-transitory computer-readable medium encoding instructions operable to cause data processing apparatus to perform operations comprising:

obtaining (i) a two-dimensional (2D) curve and (ii) predefined geometries;

converting the 2D curve and the predefined geometries into a primitive sketch geometry by approximating free regions as segmented from the 2D curve to a set of 2D primitives so as to minimize a number of 2D primitives used in the primitive sketch geometry, wherein converting the 2D curve comprises processing a plurality of candidate segments determined based on segmenting the free regions according to identified points on the 2D curve that meet a threshold for curve contact with a geometry of the predefined geometries to determine a set of segments for the free regions, and fitting the set of segments to the set of 2D primitives; and

providing the primitive sketch geometry for rendering, editing, and/or simulating at a computer-aided design program based on user input to construct a 3D model of an object for use in manufacturing a physical structure of the object using one or more computer-controlled manufacturing systems.

20. The non-transitory computer-readable medium of embodiment 19, wherein obtaining the 2D curve and the predefined geometries comprises obtaining a representation including a set of connected points that describe the 2D curve, and wherein the conversion of the 2D curve and the predefined geometries comprises:

analyzing the set of connected points by selecting first regions as fixed regions and second regions identified as free regions, wherein the fixed regions are to be replaced with an exact portion of a respective boundary geometry of the obtained predefined geometries, and wherein the free regions are to be approximated with the set of 2D primitives comprising at least one of lines, arcs, and circles;
processing the free regions to determine the plurality of candidate segments based on segmentation and evaluation of relative proximities between determined segments and the boundary geometries according to an inclusion criterion;

determining the set of segments based on the plurality of candidate segments, wherein the determining comprises iteratively evaluating the plurality of candidate segments to perform at least one of:

identifying one or more segments to be removed from the plurality of candidate segments,
identifying an additional segment to be added to the plurality of candidate segments, and/or
identifying at least one segment to be collapsed to a single point; and

generating segment specifications for the determined set of segments.

**Claims**

1. A computer-implemented method (300) comprising:

   obtaining (310) i) a two-dimensional, 2D, curve and ii) predefined geometries;
   converting (320) the 2D curve and the predefined geometries into a primitive sketch geometry by approximating free regions as segmented from the 2D curve to a set of 2D primitives so as to minimize a number of 2D primitives used in the primitive sketch geometry, wherein converting the 2D curve comprises

   processing a plurality of candidate segments determined based on segmenting the free regions according to identified points on the 2D curve that meet a threshold for curve contact with a geometry of the predefined geometries to determine a set of segments for the free regions, and
   fitting the set of segments to the set of 2D primitives; and

   providing (340) the primitive sketch geometry for rendering, editing, and/or simulating at a computer-aided design program based on user input to construct a 3D model of an object for use in manufacturing a physical structure of the object using one or more computer-controlled manufacturing systems.

2. The method of claim 1, wherein the obtained predefined geometries comprise boundary geometries comprising a set of input preserve geometries, and wherein obtaining the 2D curve and the predefined geometries comprises obtaining a representation including a set of connected points that describe the 2D curve.

3. The method of any one of claims 1 or 2, wherein the converting the 2D curve and the predefined geometries comprises assembling the fitted set of segments and at least a portion of the predefined geometries to obtain the primitive sketch geometry.

4. The method of claim 2 or claim 3, wherein the converting of the 2D curve and the predefined geometries comprises: segmenting the representation into fixed regions and the free regions, wherein the fixed regions are defined for the boundary geometries, and wherein the free regions are evaluated to determine the set of segments to be fitted to the set of 2D primitives; and

   obtaining 2D primitives for fitting the fixed regions with,
   wherein the fitting of the set of segments determined based on segmenting comprises
   selecting a 2D primitive of a primitive type to approximate a sequence of segments of a representation of the 2D curve by minimizing an error measure associated with the selected 2D primitive.

5. The method of claim 2, wherein the converting of the 2D curve and the predefined geometries comprises:

   analyzing the set of connected points by selecting first regions as fixed regions and second regions identified as free regions, wherein the fixed regions are to be replaced with an exact portion of a respective boundary geometry of the obtained predefined geometries, and wherein the free regions are to be approximated with the set of 2D primitives comprising at least one of lines, arcs, and circles;
   processing the free regions to determine the plurality of candidate segments based on segmentation and evaluation of relative proximities between determined segments and the boundary geometries according to an inclusion criterion;
   determining the set of segments based on the plurality of candidate segments, wherein the determining comprises iteratively evaluating the plurality of candidate segments to perform at least one of:

identifying one or more segments to be removed from the plurality of candidate segments,
identifying an additional segment to be added to the plurality of candidate segments, and/or
identifying at least one segment to be collapsed to a single point; and

generating segment specifications for the determined set of segments.

6.  The method of claim 5,

wherein the processing of the free regions comprises:

tagging each point of the 2D curve based on proximity of the respective point to a boundary geometry of the boundary geometries, wherein the proximity is determined according to a first threshold contact distance, wherein a point of the representation is tagged as touching when a distance between the point and a boundary geometry is below the threshold contact distance;
iteratively evaluating points on the 2D curve based on the tagging of the points to determine the plurality of candidate segments of the 2D curve; and
processing the determined plurality of candidate segments based on iterating over the points to iteratively extract segments of the determined plurality of candidate segments that meet an inclusion criterion, wherein the inclusion criterion specifies that a candidate segment is to be selected for inclusion in the set of segments when either the candidate segment connects two different boundary geometries or includes a point that is tagged as not being in contact with a boundary geometry, as having a distance to a boundary geometry above a second threshold contact distance; and

wherein the generating of the segment specifications comprises:
generating metadata for the extracted set of segments to generate a list of segment specifications for the set of segments, wherein the generating of the metadata comprises:
upon determining that a candidate segment meets the inclusion criterion, initializing an entry into the list of segment specifications to include the generated metadata for the respective segment.

7.  The method of claim 6, wherein the iteratively evaluating of the points on the 2D curve comprises:

determining a first candidate segment comprising:

determining a start point for a segment that is a point tagged as touching a boundary geometry, wherein a next point on the representation is either not touching a boundary geometry or touching a different boundary geometry,
determining an end point for the segment as a successively iterated point from the set of connected points that is touching a boundary geometry, wherein the segment between the start point and the end point is determined as the first candidate segment, and wherein a subsequent start point is determined based on iterating on points subsequent to the end point as determined for the first candidate segment;

determining whether there is at least one isolated loop that meets an inclusion loop criterion, wherein the inclusion loop criterion defines a threshold distance from the boundary geometries above which each isolated loop is to be considered for inclusion in the plurality of candidate segments;
in response to determining that there is an isolated loop that meets the inclusion loop criterion, adding the isolated loop that meets the inclusion loop criterion in the plurality of candidate segments in response to determining that the isolated loop that meets the inclusion loop criterion, encloses an area above a threshold area size to be added as a candidate segment; and
iteratively determining the plurality of candidate segments in response to the iterative evaluation.

8.  The method of claim 6, wherein the tagging of each point of the set of connected points comprises:
classifying regions of the boundary geometries as contactable and non-contactable based on inference from a structure of the fixed region to exclude a region of the boundary geometry from contacting a segment of the plurality of candidate segments.

9.  The method of claim 6, wherein the processing of the determined plurality of candidate segments comprises:
modifying at least one segment of the plurality of candidate segments to ensure connection of the at least one segment to the boundary geometry, wherein the modifying comprises

for each entry in the list of the segment specification, determining whether a point that is tagged as touching to the boundary geometry is connecting the boundary geometry; and

when determining that an entry from the list includes a point that is tagged as touching the boundary geometry does not connect with the boundary geometry, modifying the entry to include a point that actually is in contact with the boundary geometry.

10. The method of claim 5, wherein the boundary geometries comprise intersecting geometries, wherein the processing of the determined plurality of candidate segments comprises:

identifying segments from the plurality of candidate segments that are below a threshold length; and
for each of the identified segments,

determining whether there is an intersection between boundary curves attached to each end of the respective identified segment that is at a point that is within a threshold distance from a midpoint of the respective identified segment, and

in response to determining that the intersection is at the point that is within the threshold distance from the midpoint of the respective identified segment, collapsing the respective identified segment on the point.

11. The method of claim 6, wherein the boundary geometries comprise intersecting geometries, wherein processing the determined plurality of candidate segments comprises:
for each candidate segment of the list of segment specifications,

evaluating a next-in-sequence segment of the list of segment specifications for a subsequent candidate segment, and

removing the respective candidate segment and the next-in-sequence segment in response to determining that

(i) the respective candidate segment begins on a same boundary geometry where the next-in-sequence segment ends,

(ii) distances between points on 1) the respective candidate segments and isoline regions between candidate segments and points 2) on the boundary geometry are within a threshold distance of closeness to collapse the respective candidate segment, and

(iii) a distance between a set of points sampled from the boundary geometry that are between contacting endpoints of the respective candidate segment and the next-in-sequence segment is within a threshold distance to a predefined point.

12. The method of claim 5, wherein the set of connected points are sampled on a zero contour of a level-set representation of a 2D profile of a plate that is generated based on an automated modeling-plates solver to perform a shape synthesis process of a 3D geometry of a part according to boundary conditions, and wherein the method comprises:
providing segment specifications, wherein each segment specification comprises information associated with points on an isoline extracted from the level-set representation that were used to determine a respective segment, information about start and end neighbor points on boundary geometries in contact with each end of the segment, outside direction predictions defining a side of the isoline that is outside of a shape defined according to the level-set representation, identification of a next segment found in a same isoline loop, and an identity of a source isoline loop to determine the respective segment.

13. The method of claim 6, wherein the fitting of the set of segments is performed based on the list of segment specifications, and wherein the fitting comprises:

determining a set of options to fit a set of the segments of the list to one or more 2D primitives;
determining a set of score measures corresponding to the set of options based on preset criteria including a fitting error for deviation from the obtained 2D curve, a usability ranking based on types of 2D primitives used to fit a respective set of segments, obstacle proximity, and self-intersection properties; and
selecting an option from the set of options based on the determined set of score measures.

14. The method of claim 13, wherein the fitting of the set of segments comprises:

iteratively determining whether to approximate a set of successive segments identified in the list of segment specifications with a primitive of a type selected from a group consisting of a line, an arc, and a circle based on evaluations with respect to a predefined maximum error threshold measure corresponding to a type of the group of primitive types; and

in response to determining that approximating the set of successive segments with each of the primitive types of the group is associated with an error above the predefined maximum error threshold measure for approximation, approximating the set of successive segments to a four-control-point B-spline.

15. The method of claim 1, wherein the predefined geometries comprise boundary geometries, and wherein the converting of the 2D curve and the predefined geometries comprises:
fitting the boundary geometries comprising intersecting geometries and preserve geometries to one or more 2D primitives, wherein the fitting comprises:

approximating the intersecting geometries by explicit approximation with a line or a box, and
approximating the preserve geometries by arbitrary fitting to a primitive of the group consisting of a line, an arc, and a circle.

16. A system comprising:

a non-transitory storage medium having instructions of a computer aided design program stored thereon; and
one or more data processing apparatus configured to run the instructions of the computer aided design program to perform operations according to the method of any one of claims 1 to 15.

17. A non-transitory computer-readable medium encoding instructions operable to cause data processing apparatus to perform operations according to the method of any one of claims 1 to 15.

FIG. 1

FIG. 2A

250

C

B

Current
Plate

A

C

260

Current
Plate

A

B

270

FIG. 2B

C

FIG. 3

FIG. 4A

FIG. 4B

FIG. 5

EP 4 553 690 A1

FIG. 6

FIG. 7

FIG. 8

900 ⤵

```
┌─────────────────────────────────────────────────────────────┐
│  Determine a set of options to fit a set of the segments of │ ⟋ 910
│  the list to one or more 2D primitives                      │
└─────────────────────────────────────────────────────────────┘
                              │
                              ▼
┌─────────────────────────────────────────────────────────────┐
│  Determine a set of score measures corresponding to the set │ ⟋ 920
│  of options based on preset criteria including a fitting     │
│  error for deviation from the obtained 2D curve, a usability │
│  ranking based on types of 2D primitives used to fit a       │
│  respective set of segments, obstacle proximity, and         │
│  self-intersection properties                                │
└─────────────────────────────────────────────────────────────┘
                              │
                              ▼
┌─────────────────────────────────────────────────────────────┐
│  Select an option of the set of options based on the         │ ⟋ 930
│  determined set of score measures                            │
└─────────────────────────────────────────────────────────────┘
```

FIG. 9

FIG. 10

*1100*

*1110*

Start

*1120* Find junctions

*1130* Find bounding curves; flag interior fragments

*1140* Valid graph?

No

Yes

*1150* Find all paths from the current segment to the next segment

A    B

*1145*

FIG. 11A

A B

*1160* Score paths
and select the
best one

*1170* More
Unprocessed
Segments?

Yes

No

*1180* Update
intersection
geometry
(optional)

Done

FIG. 11B

1200

Input polyline ⟹ Simplified curve

1210

Input polyline ⟹ Simplified curve

FIG. 12A

FIG. 12B

FIG. 12C

1300

## Data Processing Apparatus

**Applications** 1304

3D Modeling Program(s), e.g., CAD Program(s), with sketch conversion logic

**Operating System**

**Hardware/Firmware**

1316

Computer Readable Medium

1312

Processor(s)

1318

Comm. Interface

1314

Additional Device(s)

1320

User Interface Device(s)

1390

Network

1380

## FIG. 13

Europäisches
Patentamt

European
Patent Office

Office européen
des brevets

# EUROPEAN SEARCH REPORT

**Application Number**

EP 24 21 1660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EGGLI L ET AL: "Inferring 3D models from freehand sketches and constraints", COMPUTER-AIDED DESIGN, ELSEVIER PUBLISHERS BV., BARKING, GB, vol. 29, no. 2, 1 February 1997 (1997-02-01), pages 101-112, XP004070873, ISSN: 0010-4485, DOI: 10.1016/S0010-4485(96)00039-5 * abstract * * page 101 - page 110 * * figures 1-4, 9-11, 14 * | 1-17 | INV. G06F30/12 ADD. G06F111/18 G06F111/04 G06F111/06 G06F113/10 |
| Y | QIN S F ET AL: "A framework of web-based conceptual design", COMPUTERS IN INDUSTRY, ELSEVIER, AMSTERDAM, NL, vol. 50, no. 2, 1 February 2003 (2003-02-01), pages 153-164, XP004409503, ISSN: 0166-3615, DOI: 10.1016/S0166-3615(02)00117-3 * abstract * * page 154 - page 157 * | 1-17 | |
| Y | MURUGAPPAN S ET AL: "Towards beautification of freehand sketches using suggestions", PROCEEDINGS OF THE 6TH EUROGRAPHICS SYMPOSIUM ON SKETCH-BASED INTERFACES AND MODELING, SBIM '09, ACM PRESS, NEW YORK, NEW YORK, USA, 1 August 2009 (2009-08-01), pages 69-76, XP058314599, DOI: 10.1145/1572741.1572754 ISBN: 978-1-60558-602-1 * abstract * * page 69 - page 75 * | 1-17 | TECHNICAL FIELDS SEARCHED (IPC) G06F |

-/--

The present search report has been drawn up for all claims

| Place of search | Date of completion of the search | Examiner |
|---|---|---|
| Munich | 26 March 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/151286 A1 (WILLIS KARL DARCY DANIEL [US] ET AL) 14 May 2020 (2020-05-14) * abstract * * paragraph [0070] * * paragraph [0094] * * paragraph [0149] - paragraph [0168] * * paragraph [0183] - paragraph [0188] * ----- | 1-17 | |
| | | | TECHNICAL FIELDS SEARCHED (IPC) |

The present search report has been drawn up for all claims

| Place of search | Date of completion of the search | Examiner |
|---|---|---|
| Munich | 26 March 2025 | Radev, Boyan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

page 2 of 2

## ANNEX TO THE EUROPEAN SEARCH REPORT
## ON EUROPEAN PATENT APPLICATION NO.

EP 24 21 1660

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | | Publication date |
|---|---|---|---|---|
| US 2020151286 A1 | 14-05-2020 | CN | 113366481 A | 07-09-2021 |
| | | CN | 118965601 A | 15-11-2024 |
| | | EP | 3877889 A2 | 15-09-2021 |
| | | EP | 4224354 A1 | 09-08-2023 |
| | | US | 2020151286 A1 | 14-05-2020 |
| | | US | 2023056614 A1 | 23-02-2023 |
| | | WO | 2020097578 A2 | 14-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63598299
- US 50795823
- US 67906519
- US 20200151286 A1